# EUROPÄISCHE PATENTSCHRIFT

(11) **EP 0 826 267 B1**
(45) Veröffentlichungstag und Bekanntmachung des Hinweises auf die Patenterteilung: **03.02.1999**
(21) Anmeldenummer: 96913432.9
(22) Anmeldetag: 19.04.1996
(51) Int. Cl.: H02K 23/66

(54) **ANTRIEBSVORRICHTUNG MIT EINEM ELEKTROMOTOR UND EINEM DEN MOTORSTROM SCHALTENDEN RELAIS**
DRIVE DEVICE WITH AN ELECTRIC MOTOR AND A RELAY SWITCHING THE MOTOR CURRENT
DISPOSITIF D'ENTRAINEMENT COMPORTANT UN MOTEUR ELECTRIQUE ET UN RELAIS COMMUTANT LE COURANT DU MOTEUR

(30) Priorität: 20.04.1995 DE 19515322
(43) Veröffentlichungstag der Anmeldung: 04.03.1998
(73) Patentinhaber: Brose Fahrzeugteile GmbH & Co. KG, 96450 Coburg (DE)
(72) Erfinder: HEINRICH, Peter, D-98553 Hinternah (DE); SESSELMANN, Helmut, D-96523 Steinach (DE)
(74) Vertreter: Müller, Wolfram Hubertus, Dipl.-Phys.
(86) Internationale Anmeldenummer: DE9600721
(87) Internationale Veröffentlichungsnummer: WO9633547

(56) Entgegenhaltungen:
- EP-A- 0 078 324
- EP-A- 0 474 904
- DE-A- 3 546 382
- US-A- 2 386 683

## Beschreibung

Die Erfindung bezieht sich auf eine Antriebsvorrichtung gemäß dem Oberbegriff des Anspruchs 1.

Aus der EP 0 474 904 A1 ist eine Kommutator-Getriebe-Antriebseinheit für den Fensterheberantrieb eines Kraftfahrzeugs bekannt, bei der die Motorwelle des Kommutatormotors mit einer Schneckenwelle der Getriebeeinheit verbunden ist und der Kommutator des Kommutatormotors in einstückig an einer eindimensionalen Leiterplatte angeformten Bürsten-Aufnahmeteilen für die Bürstenhalterung angeordnet ist. Die eindimensionale Leiterplatte weist mehrere zur Steuerung des Kommutatormotors dienende Bauelemente, u.a. zwei Motorrelais auf, die zur Bestromung der Motorwicklung für die Motorzustände "Ruhen", "Rechtsdrehen" und "Linksdrehen" dienen.

Die Motorrelais weisen einen erheblichen Raumbedarf auf der Leiterplatte auf und bestimmen somit im wesentlichen die Baugröße der gesamten Steuereinheit. Aufgrund ihrer Nähe zu den elektronischen Bauelementen der Leiterplatte werden Störungen infolge der Schaltvorgänge der Motorrelais verursacht bzw. es werden zusätzliche Kapselungen oder Beschaltungen erforderlich, die zur weiteren Vergrößerung der Baugröße der Antriebseinheit führen.

Aufgabe der vorliegenden Erfindung ist es, die Ansteuerung des Elektromotors einer Antriebsvorrichtung zu vereinfachen und die Baugröße der Antriebsvorrichtung sowie Störungen der Ansteuerelektronik zu verringern.

Diese Aufgabe wird durch die Merkmale des Anspruchs 1 gelöst.

Infolge der Integration des Relais zum Schalten des Motorstroms in das Motorgehäuse unter Ausnutzung der Permanentmagneten bzw. des Poltopfes des Elektromotors als magnetischen Rückschluß bzw. als Gegenpol für den Elektromagneten des Relais werden das Bauvolumen der Antriebsvorrichtung verringert, Störungen der Ansteuerelektronik durch das Schalten der Motorströme vermieden, Kosten für die Herstellung des Relais vermindert und keine Schalter für große Ströme zur Ansteuerung des Elektromotors erforderlich.

Relais mit tristabilem Verhalten zur Ansteuerung von Kommutatormotoren für die Motorzustände "Ruhen", "Rechtsdrehen" und "Linksdrehen" sind als solche bekannt. So ist aus der DE 32 43 266 C2 ein polarisiertes Relais bekannt, das aus zwei im Querschnitt U-förmigen, mit ihren kurzen Schenkeln einander zugewandten ersten Jochen und von diesen im Abstand umschlossenen kleineren, zweiten Jochen besteht. Dabei ist zwischen den ersten und den zweiten Jochen ein Permanentmagnet mit rechtwinklig zu den Großflächen der Joche verlaufender magnetischer Achse angeordnet. Die zweiten Joche umschließen außerdem eine Erregerspule, die einen in Richtung der Spulenachse verschiebbaren, stangenförmigen Anker umgibt, dessen beide außerhalb der Erregerspule liegende Enden als Platten ausgebildet sind, die zwischen den Polflächen bildenden Innenflächen der kurzen Schenkeln der ersten Joche und den Stirnflächen der zweiten Joche verschiebbar sind.

Der Anker besteht aus zwei in der Mitte der Erregerspule radial geteilten Stangenhälften, zwischen denen eine Schraubendruckfeder angeordnet ist, deren Vorspannung derart bemessen ist, daß die Platten des Ankers im stromlosen Zustand der Erregerspule an den Polflächen der kurzen Schenkel der ersten Joche anliegen, während im stromdurchflossenen Zustand der Erregerspule, abhängig von der Stromflußrichtung entweder die eine oder die andere Platte an den entsprechenden Stirnflächen der zweiten Joche anliegt.

Aus der DE 35 46 382 A1 ist ein polarisiertes elektrisches Kleinrelais bekannt, das als Zweifach-Umschaltrelais ausgebildet ist. An den beiden freien Enden eines Spulenkerns sind jeweils ein Blattanker und Rückflußelemente angeordnet. Die Blattanker werden durch in Reihe gesetzte Dauermagnete gehalten und führen bei Erregung der Spule einen synchronen Schaltvorgang aus.

Eine vorteilhafte Ausgestaltung der erfindungsgemäßen Lösung ist dadurch gekennzeichnet, daß der Elektromagnet des Relais radial um eine Achse drehbar im Poltopf des Elektromotors angeordnet ist. Vorzugsweise besteht der Elektromagnet aus einem Weicheisenanker mit Nuten für die Erregerwicklungen der Relaisspulen und ist mit beweglichen, isolierten Relaiskontakten verbunden, die in Abhängigkeit von der Bestromung der Relaisspulen zwischen zwei ortsfesten Relaiskontakten verschwenkbar sind.

Diese Ausgestaltung ermöglicht eine raumsparende Anordnung des Relais bzw. eine optimale Raumausnutzung innerhalb des Elektromotorgehäuses unter Ausnutzung des im Elektromotor vorhandenen Magnetsystems bei wahlweise großer oder geringer Schaltkraft in Abhängigkeit von der Bestromung der Relaisspulen.

Wahlweise kann der Elektromagnet konzentrisch zur Motorwelle des Elektromotors angeordnet werden und zwei im Weicheisenanker eingebettete Relaisspulen aufweisen oder die Drehachse des Elektromagneten beabstandet zur Motorwelle angeordnet und mit mindestens einer Feder verbunden werden, die den Weicheisenanker des Elektromagneten bei Nichtbestromung der Relaisspulen im stationären Magnetfeld des Permanentmagneten des Elektromotors zentriert.

Im erstgenannten Fall wird die neutrale Kontaktstellung bei Nichtbestromung der Relaisspule bzw. Relaisspulen durch die Reluktanzkräfte stets eingenommen, so daß keine Rückstelleinrichtung erforderlich ist. Im zweitgenannten Fall wird der Schwenkanker mittels der Rückstelleinrichtung im stationären Magnetfeld zentriert und ermöglicht eine hohe Schaltsicherheit sowie Unempfindlichkeit gegenüber Erschütterungen.

Der Relaisanker weist vorzugsweise bezüglich seiner Polachse symmetrisch angeordnete Flußleitelemente auf, deren Abstand zu den Gegenpolen des Permanentmagneten des Elektromotors geringer ist als der Abstand der radialen Außenfläche des Relaisankers.

An den Orten der Flußleitelemente des bezüglich seiner Nord-Süd-Achse symmetrisch angeordneten Weicheisenkerns, die Bestandteile des Weicheisenankers sind, herrscht wegen eines geringeren Luftspaltes eine höhere magnetische Induktion. Durch diese Anordnung wird im nicht bestromten Zustand der Relaispulen ein erhöhtes Rastmoment und somit eine sichere Null- bzw. Ruhestellung erzielt.

Eine weitere Ausgestaltung der erfindungsgemäßen Lösung ist dadurch gekennzeichnet, daß der Elektromagnet aus einem in einem Drehpunkt gelagerten Relaisanker mit einer Relaisspule besteht, und der Relaisanker an seinen beiden Stirnseiten mit einem beweglichen Relaiskontakt verbunden ist, der in Abhängigkeit von der Bestromung der Relaisspule zwischen zwei mit der Spannungsquelle verbundenen stationären Kontakten verschwenkbar ist.

Diese Anordnung ist besonders einfach aufgebaut und zeichnet sich durch eine geringe Empfindlichkeit gegenüber Erschütterungen aus. Sie ist variabel einsetzbar und ermöglicht durch entsprechende Polung einen Kurzschluß der Motorwicklung im Ruhezustand des Elektromagneten des Relais.

Eine vorteilhafte Weiterbildung der erfindungsgemäßen Lösung ist dadurch gekennzeichnet, daß das Relais als Doppelrelais ausgebildet ist, das zwei in Relaisspulen linear beweglich angeordnete Relaisanker aufweist, die mit jeweils einem beweglichen Relaiskontakt und einer Rückstelleinrichtung verbunden sind. Dabei können die Anker fluchtend zueinander angeordnet werden und die Rückstelleinrichtung aus einer zwischen den gegenüberliegenden Stirnseiten der Anker angeordneten Feder bestehen oder die Anker mit einer Kontaktscheibe verbunden werden, auf der zwei mit der Motorwicklung verbundene Schleifkontakte und zwei mit der Spannungsquelle verbundene Schleifbahnen angeordnet sind, und die mit einer die Kontaktscheibe in neutraler Mittelstellung zentrierenden Rückstelleinrichtung verbunden ist.

Diese verschiedenen Anordnungen von Relais mit translatorisch bewegten Elektromagneten, deren Bewegung teilweise in eine Drehbewegung umgesetzt wird, zeigen die mannigfaltigen Ausgestaltungen des Grundgedankens der erfindungsgemäßen Lösung. Je nach konstruktiver Gestaltung der Relaisspulen und Relaisanker sowie der Anordnung von Rückstelleinrichtungen zeichnen sich die Schaltrelais durch mehr oder weniger große Empfindlichkeit gegenüber Erschütterungen, größere oder geringere Schaltzeiten und kleinere oder größere Schaltkräfte aus. Ihr Einsatz hängt von den jeweiligen Randbedingungen wie Einsatzort, Schaltsicherheit, Kosten und Platzangebot ab.

Die Relaisspule(n) und der bzw. die Relaisanker können relativ zueinander linear beweglich angeordnet werden, so daß bei ortsfester Relaisspule der Relaisanker mit einem beweglichen Relaiskontakt und bei ortsfestem Relaisanker die Relaisspule mit einem beweglichen Relaiskontakt verbunden wird.

Die Relaisanker können fluchtend zueinander angeordnet sein und die Rückstelleinrichtung aus einer zwischen den einander gegenüberliegenden Stirnseiten der Relaisanker angeordneten Zug- oder Druckfeder bestehen.

In der letztgenannten Ausführungsform kann ein Rückstellelement entfallen, da die als Weicheisenkerne ausgebildeten Relaisanker von den Polen des Permanentmagneten des Elektromotors in Ruhestellung angezogen werden und damit die Kontaktierung der beweglichen Relaiskontakte mit den ortsfesten Relaiskontakten bewirken, ohne daß hierzu eine die Relaisanker auseinanderdrückende Druckfeder erforderlich ist.

Eine weitere Variante der erfindungsgemäßen Lösung ist dadurch gekennzeichnet, daß das Relais als quer zur Motorwelle des Elektromotors angeordnetes Schieberelais ausgebildet ist, wobei vorzugsweise im Relaisanker des Schieberelais mindestens zwei Relaisspulen ntegriert sind und einen Elektromagneten bilden, der im Magnetfeld des als Nordpol und Südpol ausgebildeten Permanentmagneten des Elektromotors angeordnet ist.

Diese Ausführungsform ist in ihrer Geometrie dem vorhandenen Bauraum im Gehäuse des Elektromotors platzsparend anzupassen und da die neutrale Kontaktstellung bei Nichtbestromung der Relaisspulen durch die Reluktanzkräfte stets eingenommen wird, ist keine Rückstelleinrichtung zur Herstellung der neutralen oder Ruhestellung erforderlich ist. Zudem kann durch differenzierte Bestromung der Relaisspulen bei einer getrennten Ansteuerung der Relaisspulen eine Quantifizierung des Verschiebeweges vorgesehen werden.

Die Ansteuerung der im Gehäuse eines Elektromotors integrierten Relais hängt von der Wahl eines Einfach- oder Doppelrelais und davon ab, ob eine zusätzliche Drehzahlerfassung beispielsweise mit einem Hallsensor zu berücksichtigen ist.

Zur Ansteuerung einer Relaisspule wird diese in der Brückendiagonale einer Transistorbrücke angeordnet und mit den Kollektoren jeweils zweier in Reihe geschalteter Transistoren unterschiedlichen Leitfähigkeitstyps verbunden, wobei die Emitter der in Reihe geschalteten Transistoren unterschiedlichen Leitfähigkeitstyps mit positivem bzw. negativem oder Massepotential verbunden sind.

Zur Ansteuerung eines Doppelrelais werden die Relaisspulen über einen Anschluß miteinander verbunden und mit dem jeweils anderen Anschluß an die Laststrecke eines Transistors angeschlossen, dessen Basis mit der Ansteuerelektronik verbunden ist.

Wird die Drehzahl mit einem Sensorelement erfaßt, können vorteilhaft bestimmte Anschlüsse gemeinsam genutzt werden, indem der Signalausgang des Sensorelements und die Relaisspulen mit jeweils einer gemeinsamen Treiber- und Signalerfassungsstufe verbunden sind, über die sowohl die Steuersignale zur Ansteuerung des Relais als auch über die jeweils nicht genutzte Ansteuerleitung für das Relais die Sensorsignale übertragen und gegebenenfalls verstärkt und gefiltert werden.

Die Anordnung des Relais im Poltopf eines Elektromotors zum Schalten des Ankerstroms des Elektromotors in der einen oder anderen Richtung bzw. zum Kurzschließen der Ankerwicklung schließt folgende Varianten ein:
a) Anordnung des Relais im Poltopf des Elektromotors an beliebiger Stelle;
b) Integration des Relais auf der Motorelektronik und Anordnung dieses integrierten Bauelements im Poltopf des Elektromotors sowie
c) Verbindung des integrierten, aus dem Relais und der Motorelektronik bestehenden Bauteils mit dem Kommutator des Elektromotors.

In allen Anordnungen können die Freilaufdioden und die Schutzbeschaltung für die Relaiskontakte ebenfalls in das Motorgehäuse integriert werden. Durch die Integration des Relais, das das größte Bauelement innerhalb einer Ansteuerelektronik darstellt, in das Gehäuse eines Elektromotors entsteht eine sehr große Bauraumfreiheit. Dies führt weiterhin zu der Möglichkeit, die Ansteuerelektronik an Stellen einzubauen, die bei vorhandenen Relais auf der Ansteuerelektronik als Einbauorte entfallen würden.

So läßt sich beispielsweise die Ansteuerelektronik für eine Sitzverstelleinrichtung eines Kraftfahrzeugs in Verkleidungsteile oder in den Sitzverstellschalterblock einbauen. Weiterhin können sämtliche Elektromotoren eines komplexen Verstellsystems, wie Sitzverstellung, Fensterheberelektronik und dgl., in einem Kraftfahrzeug über eine Ringleitung direkt mit der Bordspannung verbunden werden, während die Ansteuer- sowie Sensorsignalleitungen über eine getrennte Leitungsverbindung zum jeweiligen Anschluß an der Steuerelektronik geführt werden. Somit wäre nur ein Kabelbaum mit Leistungs- und Signalleitungen in der entsprechenden Verstelleinrichtung eines Kraftfahrzeugs erforderlich.

Weitere vorteilhafte Ausgestaltungen der Erfindung ergeben sich aus den übrigen Ansprüchen sowie der folgenden Beschreibung mehrerer Ausführungsbeispiele, die unter Bezugnahme auf die Zeichnung näher erläutert werden. In dieser zeigen:
- Fig. 1 -: einen Querschnitt durch ein im Poltopf eines Elektromotors konzentrisch zur Motorwelle angeordnetes Drehrelais;
- Fig. 2 und 3 -: die Auslenkung des Drehrelais gemäß Figur 1 in Abhängigkeit von der Bestromung der Relaisspulen;
- Fig. 4 -: ein im Poltopf eines Elektromotors angeordnetes Drehrelais mit exzentrischer Lagerung des Elektromagneten;
- Fig. 5 und 6 -: die Auslenkung des Drehrelais gemäß Figur 4 in Abhängigkeit von der Bestromung der Relaisspulen;
- Fig. 7 -: ein im Poltopf eines Elektromotors angeordnetes Drehrelais mit exzentrischer Lagerung des Elektromagneten mit einer Wicklung und einem Relaisanker
- Fig. 8 -: ein im Poltopf eines Elektromotors angeordnetes Drehrelais entsprechend Figur 7 mit zwei Wicklungen und zwei durch einen nichtmagnetischen Werkstoff miteinander verbundenen Relaisankern;
- Fig. 9 und 10 -: ein im Poltopf eines Elektromotors angeordnetes Doppelrelais mit linear beweglichen Relaisankern;
- Fig. 11 -: ein im Poltopf eines Elektromotors angeordnetes Relais mit feststehendem Anker und beweglicher Relaisspule;
- Fig. 12 -: ein im Poltopf eines Elektromotors integriertes, quer zur Motorwelle angeordnetes Schieberrelais;
- Fig. 13 bis 15 -: ein im Poltopf eines Elektromotors angeordnetes Doppelrelais mit einer Verbindung der beweglichen Anker mit einer Drehscheibe;
- Fig. 16 -: einen Längsschnitt durch die Anordnung gemäß Figur 14 mit einer Darstellung des Elektromotors;
- Fig. 17 -: eine Schaltung zur Ansteuerung eines Doppelrelais;
- Fig. 18 -: eine Schaltung zur Ansteuerung eines Einspulen-Relais und
- Fig. 19 -: eine Schaltung zur Ansteuerung eines Doppelrelais mit Integration eines Hallsensors.

Im folgenden wird unter der Bezeichnung "Elektromagnet" eine Anordnung aus einer oder mehreren Relaisspulen, einem oder mehreren Relaisankern, dem bzw. den Permanentmagneten und dem magnetischen Rückschluß (Poltopf) verstanden, wobei letztere erfindungsgemäß Bestandteile des Elektromotors sind. Unter der Bezeichnung "Relais" wird die Zusammenfassung aus "Elektromagnet" und den Schaltkontakten des Relais verstanden.

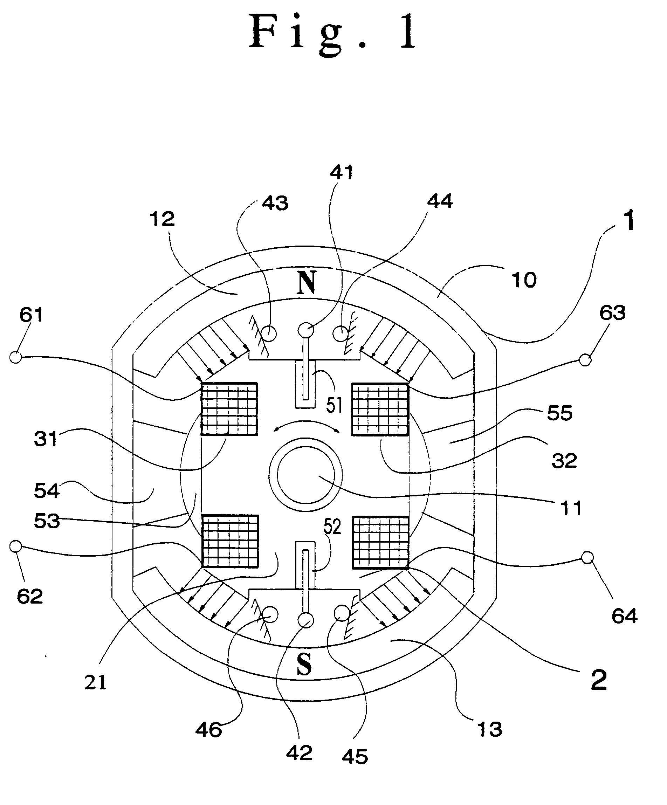

Das in Figur 1 dargestellte, im Poltopf 10 eines Elektromotors integrierte Relais 2 ist als konzentrisch zur Motorwelle 11 angeordnetes Drehrelais ausgebildet, in dessen Relaisanker 21 zwei Relaisspulen 31, 32 integriert sind und einen Elektromagneten bilden, der im Magnetfeld des einen Nord- und Südpol 12, 13 ausbildenden Permanentmagneten des Elektromotors angeordnet ist. Die Anschlüsse 61 bis 64 der Relaisspulen 31, 32 sind mit einer nicht näher dargestellten Ansteuerelektronik verbunden, die mittels entsprechender Bestromung der Relaisspulen 31, 32 die Auslenkung des Elektromagneten des Relais 2 in der einen oder anderen Richtung im Magnetfeld des Permanentmagneten 12, 13 bewirkt.

Der Relaisanker 21 ist über eine Isolation 51, 52 mit zwei beweglichen Relaiskontakten 41, 42 verbunden, denen stationäre Relaiskontakte 43, 44, 45, 46 gegenüberstehen, die als Anschläge zur Begrenzung der Auslenkung des Elektromagneten des Relais 2 dienen und mit einem positiven bzw. negativen Anschluß einer Spannungsquelle verbunden sind, während die beweglichen Relaiskontakte 41, 42 mit der Motorwicklung bzw. den Bürsten des Kommutatormotors verbunden sind. Eine mit dem Relaisanker 21 verbundene Isolation 53 ist als Drehkranz ausgebildet und in Segmentlagerschalen 54, 55 gelagert. Der Relaisanker 21 ist als Weicheisenanker ausgebildet und in seiner Geometrie dem vorhandenen Bauraum im Gehäuse des Elektromotors platzsparend angepaßt.

In der Ruhe- oder neutralen Stellung steht das Relais 2 im Bereich des kleinsten magnetischen Widerstandes innerhalb des aus dem Nord- und Südpol 12, 13 des Permanetmagneten des Elektromotors gebildeten Magnetfeldes. Um das Relais 2 aus dieser Raststellung auszulenken, muß ein Drehmoment aufgebracht werden, das sich proportional zum Verdrehwinkel verhält. Die in Figur 1 dargestellte neutrale Kontaktstellung wird bei Nichtbestromung der Relaisspulen 31, 32 durch die Reluktanzkräfte stets eingenommen, so daß in dieser Anordnung keine Rückstelleinrichtung zur Herstellung der neutralen oder Ruhestellung erforderlich ist.

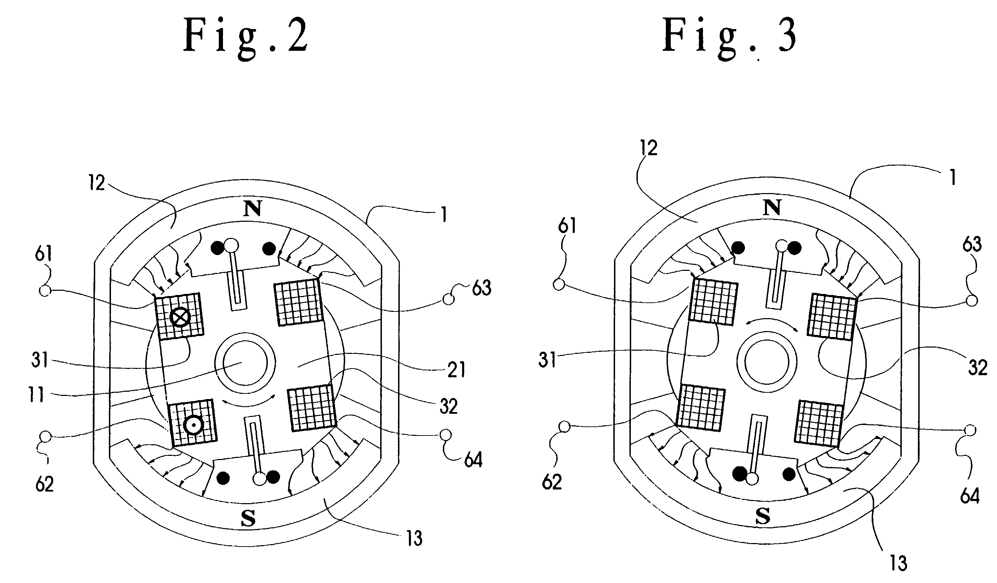

Figur 2 zeigt eine Bestromung der Relaisspulen 31, 32 in der eingetragenen Bestromungsrichtung, so daß eine entsprechende Polarität vorgegeben wird, die nach dem elektrodynamischen Induktionsprinzip eine Auslenkkraft zur Folge hat. Dementsprechend wird das Relais 2 bei der in Figur 2 eingetragenen Bestromungs- oder Durchflutungsrichtung entgegen dem Uhrzeigersinn ausgelenkt und die beweglichen Relaiskontakte 41, 42 berühren die stationären Relaiskontakte 43, 45. Die Verdrehung erfolgt entweder gegenüber der Motorwelle oder partiell innerhalb des aus dem Drehkranz 53 und den Segmentlagerschalen 54, 55 gebildeten Lagers. Dabei ist die Verdrehlagerung Bestandteil des Bürstenhalters des Elektromotors oder eines entsprechenden Elektronikmoduls, wie dies eingangs beschrieben wurde. Die beweglichen Relaiskontakte 41, 42 und stationären Relaiskontakte 43 bis 45 sind vorzugsweise ebenfalls integraler Bestandteil eines Elektronikmoduls bzw. bei nicht durch eine elektronische Ansteuereinheit angesteuerte Elektromotore Bestandteil der Bestromungseinheit.

Bei der in Figur 3 dargestellten Bestromungsrichtung der Relaisspulen 31, 32 erfolgt eine Auslenkung des Relaisankers 21 im Uhrzeigersinn, so daß die beweglichen Relaiskontakte 41, 42 die ortsfesten Relaiskontakte 44, 46 kontaktieren.

In Abhängigkeit von der Auslenkung des Relaisankers 21 in der einen oder anderen Richtung gemäß den Figuren 2 bzw. 3 wird die Motorwicklung in der einen oder anderen Richtung vom Motorstrom durchflossen, so daß eine Rechts- oder Linksdrehung des Elektromotors die Folge ist. In der Ruhestellung des Relais 2 gemäß Figur 1 ist die Motorwicklung nicht stromdurchflossen, so daß der Elektromotor ruht. Zum Stillsetzen des Elektromotors aus einer Rechts- oder Linksdrehung heraus kann durch kurzfristige entsprechende Umpolung des Ansteuerstroms der Relaisspulen 31, 32 eine Gegendrehbewegung des Elektromotors erzeugt werden, die ein beschleunigtes Stillsetzen des Elektromotors zur Folge hat bzw. für den Einsatz der Antriebsvorrichtung in einem Scheibenheber als Einklemmschutz eine Öffnungsbewegung der Fensterscheibe bewirkt. Auch durch einen Kurzschluß des Elektromotors kann ein beschleunigtes Stillsetzen des Motors bewirkt werden.

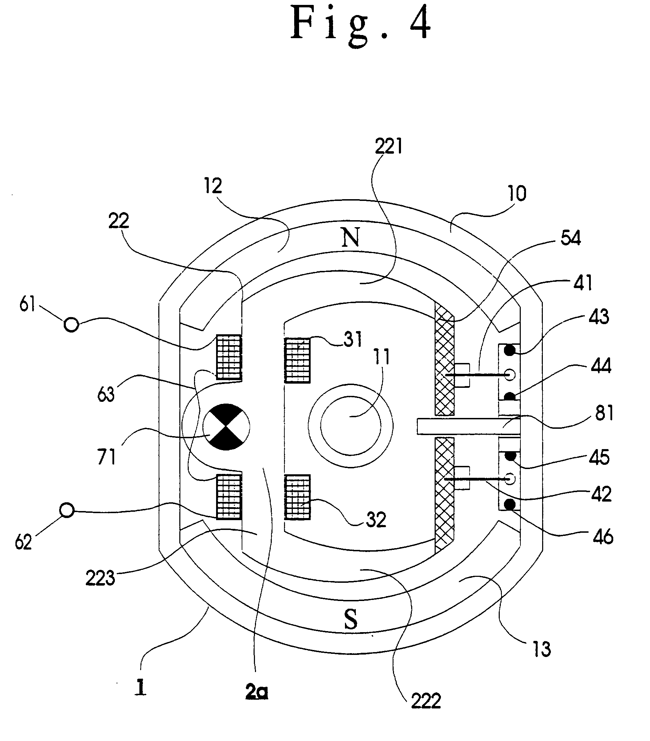

Figur 4 zeigt ein alternatives Ausführungsbeispiel eines Drehrelais 2a, das im Poltopf 10 eines Elektromotors angeordnet ist. In dieser Ausführungsform ist der Relaisanker als außermittig zur Motorwelle 11 gelagerter Schwenkanker 22 ausgebildet. Die beiden Schenkelabschnitte 221 und 222 des außermittig gelagerten Schwenkankers 22 stehen dem Nord- und Südpol 12, 13 des Permanentmagneten des Elektromotors gegenüber und sind über einen Basisabschnitt 223 mit einem Lager 71 verbunden. Der Basisabschnitt 223 trägt die Relaisspulen 31, 32, die in Reihe miteinander über eine Leitung 63 verbunden sind, während die anderen Wicklungsenden 61, 62 an die Ansteuerelektronik angeschlossen sind, die die Bestromungsrichtung der Relaisspulen 31, 32 vorgibt.

Die dem Basisabschnitt 223 gegenüberliegenden Enden der Schenkelabschnitte 221 und 222 des außermittig gelagerten Schwenkankers 22 sind über eine Isolationsplatte 54 miteinander verbunden, in der die beweglichen Relaiskontakte 41, 42 angeordnet sind, die den ortsfesten Relaiskontakten 43 bis 46 analog zur Anordnung gemäß Figur 1 gegenüberstehen.

Die Isolationsplatte 54 dient weiterhin zur Aufnahme eines als Biegefeder ausgebildeten Rückstellelements 81, das fest mit der Isolation zur Aufnahme der ortsfesten Relaiskontakte 43 bis 46 verbunden ist.

Figur 4 zeigt die Ruhestellung des Relais 2a mit außermittig gelagertem Schwenkanker 22, in der der Schwenkanker 22 durch die Biegefeder 81 im stationären Magnetfeld des Permanetmagneten 12, 13 zentriert wird. Die Arbeitsluftspalte zwischen den Schenkeln des außermittig gelagerten Schwenkankers 22 und den Permanentmagneten 12, 13 sind relativ konstant. In dieser Mittelstellung befindet sich der nicht erregte Elektromagnet des Relais 2a im Gleichgewicht, die ortsfesten Relaiskontakte 43 bis 46 sind geöffnet, so daß die an die beweglichen Relaiskontakte 41, 42 angeschlossene Motorwicklung stromlos ist.

Um die Motorwicklung kurzzuschließen, z.b. zur Stabilisierung der Ruhestellung oder zur schnellen Abbremsung des Motors werden die Relaiskontakte 44 und 45 mit den Relaiskontakten 41 und 42 verbunden, wobei die Relaiskontakte 44 und 45 die gleiche Polarität aufweisen.

Durch Bestromen der Relaisspulen 31, 32 wird der außermittig gelagerte Schwenkanker 22 entgegen dem oder im Uhrzeigersinn verschwenkt und damit die beweglichen Relaiskontakte 41, 42 in Kontakt mit den einen oder anderen ortsfesten Kontakten 43 bis 46 gebracht, so daß die Motorwicklung in der einen oder anderen Richtung vom Motorstrom durchflossen wird.

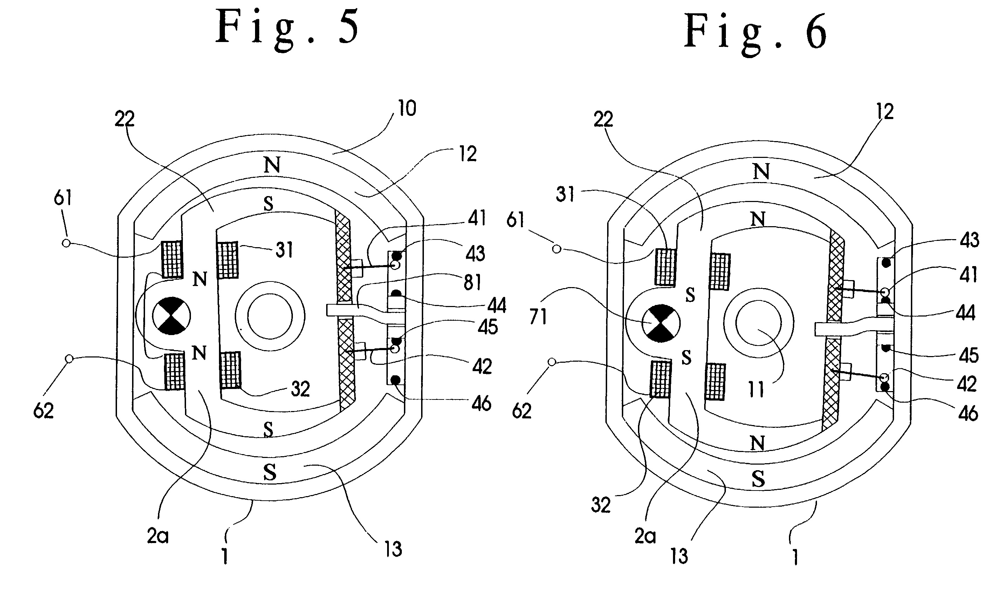

Figur 5 zeigt eine Stellung des außermittig gelagerten Schwenkankers 22 infolge einer Bestromung der Relaisspulen 31, 32 in der Richtung, daß die dem Schwenklager 71 zugewandten Spulenköpfe der Relaisspulen 31, 32 Nordpole ausbilden, so daß an den Schenkeln des Schwenkankers 22 Südpole ausgebildet werden. Dadurch ziehen sich der Nordpol 12 des Permanentmagneten und der diesem Nordpol 12 gegenüberstehende Schenkel des Schwenkankers 22 an, während sich auf der anderen Seite des Schwenklagers 71 der Südpol 13 des Permanentmagneten sowie der Südpol des Schenkels des Schwenkankers 22 abstoßen. Das dadurch gebildete Kräftepaar ruft infolge der Auslenkung des Schwenkankers 22 an dem Schwenklager 71 ein Drehmoment hervor, so daß der Schwenkanker 22 entgegen dem Uhrzeigersinn um das Schwenklager 71 bewegt wird. Dementsprechend kommt es zur Kontaktierung der beweglichen Relaiskontakte 41, 42 mit den ortsfesten Relaiskontakten 43, 45. Gleichzeitig wird die als Rückstellelement dienende Biegefeder 81 in der in Figur 5 dargestellten Weise ausgelenkt.

In Figur 6 ist eine Stellung des Schwenkankers dargestellt, die aus einer Bestromung der Relaisspulen 31, 32 in entgegengesetzter Richtung zur Bestromungsrichtung gemäß Figur 5 resultiert. Bei dieser Bestromung der Relaisspulen 31, 32 werden an den dem Schwenklager 71 zugewandten Spulenköpfen der Relaisspulen 31, 32 Südpole ausgebildet, so daß entsprechend die Schenkel des Schwenkankers 22 Nordpole ausbilden. Dadurch stoßen sich die gleichnamigen Nordpole ab, während sich die ungleichnamigen Nord- und Südpole auf der gegenüberliegenden Seite anziehen. Aus den daraus resultierenden Kräften in Verbindung mit der Auslenkung des Schwenkankers 22 am Schwenklager 71 wird ein Drehmoment hervorgerufen, durch das der Schwenkanker 22 im Uhrzeigersinn gedreht wird. Infolge dieser Drehung kontaktieren die beweglichen Relaiskontakte 41, 42 die ortsfesten Relaiskontakte 44, 46 und bewirken eine Bestromung der an die beweglichen Relaiskontakte 41, 42 angeschlossenen Motorwicklung in einer Richtung, die der Richtung gemäß Figur 5 entgegengesetzt ist.

Die Konfiguration der Magnetkreisgeometrie liegt im Ermessen des Konstrukteurs und den jeweiligen Randbedingungen bei der Konstruktion einer optimierten Antriebsvorrichtung. In die Gestaltung der Magnetkreisgeometrie kann auch die Nutzung des Poltopfes 10 als Flußweg einbezogen werden.

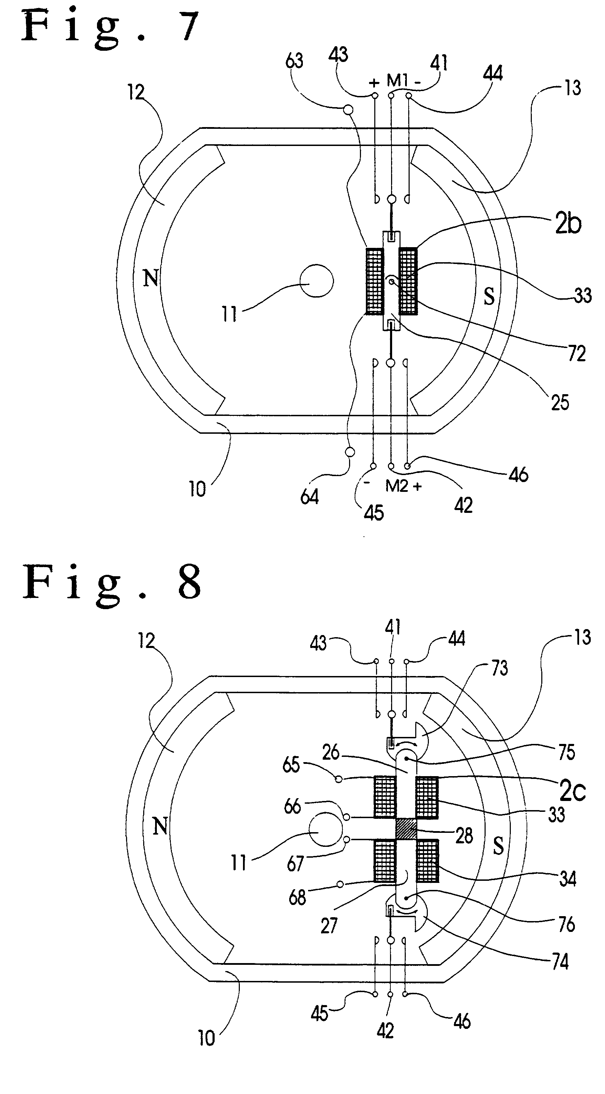

In Figur 7 ist eine andere Ausführungsform eines Drehrelais 2b dargestellt, das außermittig in bezug auf die Motorwelle 11 gelagert ist.

In dieser Ausführungsform ist der Relaisanker 25 fest mit dem Körper der Relaisspule 33 verbunden und der aus dieser Verbindung gebildete Teil des Elektromagneten drehbar um die Achse 72 gelagert. Die Spulenanschlüsse 63, 64 werden je nach gewünschter Verschwenkung des Relais 2b mit positivem oder negativem bzw. Massepotential verbunden. Die mit den Stirnseiten des Relaisankers 25 verbundenen beweglichen Relaiskontakte 41, 42 sind federnd ausgebildet, so daß bei nicht bestromter Relaisspule 33 die beweglichen Relaiskontakte 41, 42 eine Ruhelage einnehmen, in der kein Kontakt mit den ortsfesten Relaiskontakten 43 bis 46 geschlossen wird. Die Kontaktfedern der beweglichen Relaiskontakte 41, 42 ziehen somit den Relaisanker 25 mit der mit ihm verbundenen Relaisspule 33 in die Ruheposition.

Wird der Spulenanschluß 63 mit positivem Potential und der Spulenanschluß 64 mit negativem bzw. Massepotential beaufschlagt, so wird die Wicklung der Relaisspule 33 mit entsprechender Polarität bestromt und es bildet sich entsprechend der Wicklungsrichtung der Relaisspule 33 ein Magnetfluß aus, dessen Feldlinien so gerichtet sind, daß sie mit den Feldlinien des Magnetfeldes des Permanentmagneten 12, 13 des Elektromotors in gleicher Richtung liegen. Dementsprechend wird der Relaisanker 25 mit der Relaisspule 33 des Relais 2b im Uhrzeigersinn verdreht und es werden die ortsfesten Relaiskontakte 46, 43 mit den beweglichen Relaiskontakten 41, 42 verbunden.

Wird die Relaisspule 33 durch einen Wechsel der Polarität der Spulenanschlüsse in entgegengesetzter Richtung bestromt, so dreht sich der Relaisanker 25 entgegen dem Uhrzeigersinn und die ortsfesten Relaiskontakte 45, 44 kontaktieren die beweglichen Relaiskontakte 41, 42, so daß die Drehrichtung des mit der Motorwicklung an die beweglichen Relaiskontakte 41, 42 angeschlossenen Elektromotors geändert wird.

Bei der in Figur 7 dargestellten Ausführungsform wird bei nicht bestromter Relaisspule 33 eine Ruhelage des Schwenkankers eingenommen, in der die Motorwicklung des Elektromotors nicht bestromt wird. In analoger Weise kann aber in dieser Ruhestellung ein Kontakt geschlossen sein, um den Elektromotor kurzzuschließen.

Die in Figur 8 dargestellte Ausführungsform weist analog zur Anordnung gemäß Figur 7 ein außermittig in Bezug auf die Motorwelle 11 gelagertes Relais 2c auf, bei dem der Relaisanker aus zwei Teilankern 26, 27 besteht, die über einen nichtmagnetischen Werkstoff 28 miteinander verbunden sind und jeweils eine fest mit ihnen verbundene Relaisspule 33, 34 tragen. Die Relaisanker 26, 27 sind über zwei Anlenkungen 75, 76 mit Drehelementen 73, 74 verbunden, die mit den beweglichen Relaiskontakten 41, 42 gekoppelt sind.

Die Wicklungsanschlüsse 65, 66 bzw. 67, 68 der Relaisspulen 33 bzw. 34 werden je nach gewünschter Verschwenkung des Elektromagneten mit positivem oder negativem bzw. Massepotential verbunden. Je nach Bestromung der Relaisspulen 33, 34 werden die Drehelemente 73, 74 in der einen oder anderen Richtung verschwenkt, so daß die beweglichen Relaiskontakte 41, 42 die einen oder anderen ortsfesten Relaiskontakte 43, 44 bzw. 45, 46 kontaktieren und dementsprechend die Drehrichtung des Elektromotors verändern. Die Nullstellung wir durch die mit den Relaiskontakten 41, 42 verbundenen Kontaktfedern gehalten.

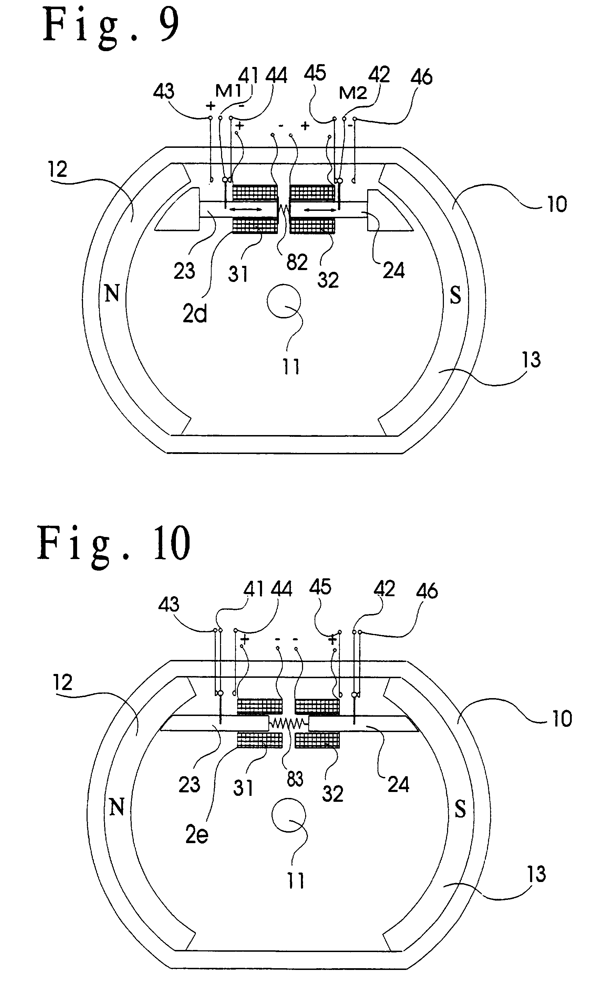

In den Figuren 9 bis 16 sind Antriebsvorrichtungen mit linear beweglichem Anker eines Relais dargestellt, deren Verstellweg auch mit einem entsprechenden Koppelglied in eine Drehbewegung umgesetzt werden kann.

Figur 9 zeigt ein als Doppelrelais 2d ausgebildetes polarisiertes Relais mit zwei translatorisch beweglichen Relaisankern 23, 24, die linear beweglich und fluchtend zueinander in ortsfesten Relaisspulen 31, 32 angeordnet sind. Die einander zugewandten Stirnseiten der Relaisanker 23, 24 sind über eine Zugfeder 82 miteinander verbunden, während die gegenüberliegenden Stirnseiten der Relaisanker 23, 24 dem Nord- bzw. Südpol 12, 13 des Permanentmagneten des Elektromotors gegenüberstehen.

Die Relaisanker 23, 24 sind fest mit den beweglichen Relaiskontakten 41, 42 verbunden, die analog zu den vorstehend dargestellten und beschriebenen Ausführungsformen festen Relaiskontakten 43 bis 46 gegenüberstehen und mit der Motorwicklung bzw. den Bürsten des Elektro- bzw. Kommutatormotors verbunden sind.

Wird die Relaisspule 31 mit entsprechender Polarität bestromt, so bildet sich entsprechend der Wicklungsrichtung der Relaisspule 31 ein Magnetfluß aus, dessen Feldlinien so gerichtet sind, daß sie mit den Feldlinien des Magnetfeldes des Permanentmagneten 12, 13 in gleicher Richtung liegen. Dadurch wird der Relaisanker 23 aus dem Körper der Relaisspule 31 herausbewegt und der bewegliche Relaiskontakt 41 vom stationären Relaiskontakt 44 weg und auf den stationären Relaiskontakt 43 zubewegt, so daß der eine Relaiskontakt geöffnet und der andere Relaiskontakt geschlossen wird. Nach Unterbrechung des Spulenstroms oder durch Umpolen der Spulenstromrichtung wird der Relaisanker 24 durch die Zugfeder 82 bis zum Anschlag in den Spulenkörper der Relaisspule 31 zurückgezogen und dementsprechend der zuvor geöffnete Relaiskontakt geschlossen und der zuvor geschlossene Relaiskontakt geöffnet.

Wird die Wicklung der zweiten Relaisspule 32 entsprechend bestromt, so läuft der vorstehend beschriebene Vorgang mit der Relaisspule 32 und dem Relaisanker 24 sowie dem mit dem Relaisanker 24 verbundenen beweglichen Relaiskontakt 42 und den ortsfesten Relaiskontakten 45, 46 ab. Dadurch wird die Bestromung der Motorwicklung des Elektromotors geändert, d.h. aus einer Ruhestellung heraus eine Rechts- oder Linksdrehung des Elektromotors bewirkt. In der Ruhestellung des in Figur 8 dargestellten Doppelrelais 2d wird die Motorwicklung kurzgeschlossen.

Die Relaisanker 23, 24 sollten zur Erzielung kurzer Schaltzeiten sowie zur Vermeidung von Schaltfehlern infolge von äußeren Erschütterungen möglichst leicht und aus Weicheisen sein, um die Remanenz zu verringern. Entsprechend sollte die Zugfeder 82 eine hinreichend große Federkonstante aufweisen, um die Relaisanker 23, 24 sicher von den Permanentmagneten 12, 13 des Elektromotors nach Ausschalten oder Umpolen des Spulenstroms zu lösen.

Figur 10 zeigt ein Doppelrelais 2e analog zu dem in Figur 9 dargestellten Doppelrelais 2d. Eine zwischen den Relaisankern 23, 24 angeordnete Druckfeder 83 drückt die mit der in Figur 10 eingetragenen Polung versehenen Relaisanker 23, 24 in Richtung auf die entsprechend gepolten Nord- bzw. Südpole des Permanentmagneten 12, 13 des Elektromotors, die bei entsprechender Bestromung der Relaisspulen 31, 32 gegen die Wirkung der Druckfeder 83 in die Relaisspulen 31, 32 hineingezogen werden und dementsprechend die mit ihnen verbundenen beweglichen Relaiskontakte 41, 42 mit den ortsfesten Relaiskontakten 44 bzw. 45 verbinden. In der in Figur 10 dargestellten Ruhestellung sind die beweglichen Relaiskontakte 41, 42 mit den ortsfesten Relaiskontakten 43 bzw. 46 verbunden zur Vorgabe einer gewünschten Drehrichtung des Elektromotors.

Die in Figur 10 dargestellte Druckfeder 83 kann jedoch entfallen, da die als Weicheisenkerne ausgebildeten Relaisanker 23, 24 von den Polen 12 bzw. 13 des Permanentmagneten 12, 13 des Elektromotors in Ruhestellung angezogen werden und damit die Kontaktierung der beweglichen Relaiskontakte 41, 42 mit den ortsfesten Relaiskontakten 43, 46 bewirken, ohne daß hierzu eine die Relaisanker 23, 24 auseinanderdrükkende Druckfeder 83 erforderlich ist.

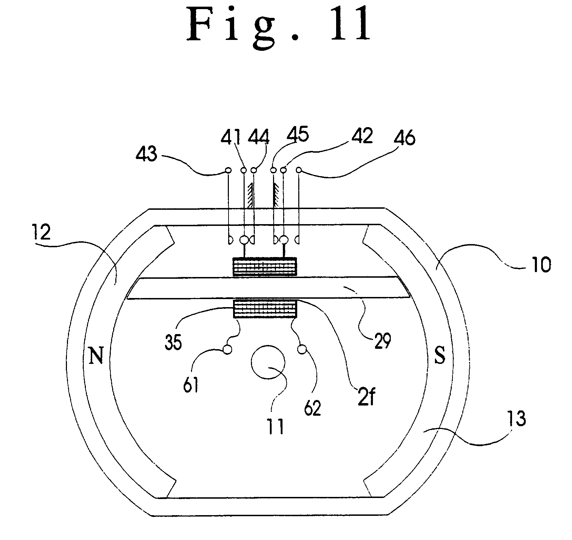

In Figur 11 ist in kinematischer Umkehr der Anordnung gemäß den Figuren 9 und 10 ein Relais 2f dargestellt, das einen zwischen den Polen 12, 13 des Permanentmagneten des Elektromotors feststehend angeordneten Relaisanker 29 zeigt, auf dem eine in Längsrichtung des Relaisankers 29 verschiebbare Relaisspule 35 beweglich angeordnet ist. In dieser Ausführungsform ist die Relaisspule mit den beweglichen Relaiskontakten 41, 42 verbunden und je nach Bestromung der Relaisspule 35 über deren Wicklungsanschlüsse 61, 62 mit entsprechender Ausbildung eines Magnetfeldes wird die Relaisspule 35 in die eine oder andere Richtung bewegt. Da die ortsfesten Relaiskontakte 43, 44 bzw. 45, 46 als federnde Kontakte ausgebildet sind, wobei der Federweg der innenliegenden ortsfesten Relaiskontakte 44, 45 durch symbolisch dargestellte Anschläge begrenzt wird, werden bei Auslenkung der Relaisspule 35 in die eine oder andere Richtung die beweglichen Relaiskontakte 41, 42 mit den ortsfesten Relaiskontakten 44, 45 beispielsweise zum Kurzschluß der Motorwicklung entsprechend der in Figur 11 dargestellten Stellung verbunden oder bei entsprechender Auslenkung die beweglichen Mittelkontakte 41, 42 mit den ortsfesten Relaiskontakten 44, 46 bzw. 45, 43 verbunden.

Die Anordnung gemäß Figur 11 läßt sich in der Weise modifizieren, daß zwei Relaisanker sowie zwei Relaisspulen vorgesehen werden analog der Anordnung gemäß Figur 10. In einer derartigen Anordnung werden die beiden Relaisanker über einen nichtmagnetischen Werkstoff miteinander verbunden und die Relaisspulen so auf dem Relaisankern längsverschieblich angeordnet, daß eine der Anordnung Figur 10 entsprechende Kontaktierung der Relaiskontakte bei entsprechender Bestromung der beiden Relaisspulen erfolgt.

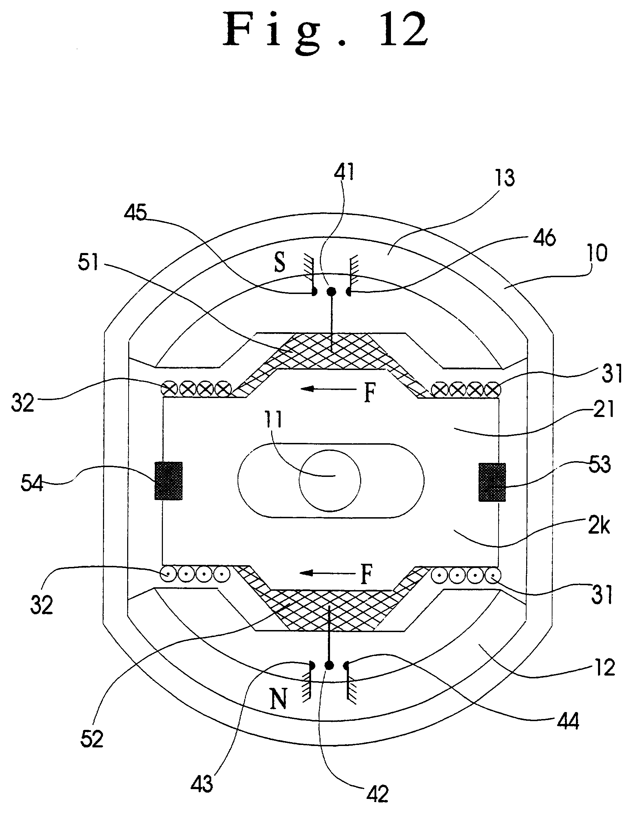

Das in Figur 12 dargestellte, im Poltopf 10 eines Elektromotors integrierte Relais 2 ist als quer zur Motorwelle 11 angeordnetes Schieberrelais 2k ausgebildet, in dessen Relaisanker 21 zwei im Schnitt dargstellte Relaisspulen 31, 32 integriert sind und einen Elektromagneten bilden, der im Magnetfeld des als Nord- und Südpol 12, 13 ausgebildeten Permanentmagneten eines Elektromotors angeordnet ist.

Die Anschlüsse der Relaisspulen 31, 32 sind mit einer nicht näher dargestellten Ansteuerelektronik verbunden, die mittels entsprechender Bestromung der Relaisspulen 31, 32 die Auslenkung des Relais 2k um 90° quer zum stationären Magnetfeld des Permanentmagneten 12, 13 in der einen oder anderen Richtung bewirkt.

Der Relaisanker 21 ist über eine Isolation 51, 52 mit zwei beweglichen Relaiskontakten 41, 42 verbunden, denen stationäre Relaiskontakte 43, 44 bzw. 45, 46 gegenüberstehen. Die Anschlagbegrenzung erfolgt über zwei Isolierkörper 53, 54. Die beweglichen Relaiskontakte 41, 42 sind mit der Motorwicklung bzw. den Bürsten des Kommulatormotors verbunden. Die stationären Relaiskontakte 43 bis 46 sind mit einem positiven bzw. negativen Anschluß an eine Spannungsquelle angeschlossen. Die Isolationsteile 51, 52 dienen zusätzlich als Gleitelemente.

Der Relaisanker 21 ist als Weicheisenanker ausgebildet und in seiner Geometrie dem vorhandenen Bauraum im Gehäuse des Elektromotors platzsparend angebracht. In der Ruhe- oder neutralen Stellung steht das Relais 2k im Bereich des kleinsten magnetischen Widerstandes innerhalb des aus dem Nordpol 12 und dem Südpol 13 des Permanentmagneten des Elektromotors ausgebildeten Magnetfeldes. Um das Relais 2k aus dieser Raststellung auszulenken, muß eine Schubkraft aufgebracht werden, die sich proportional zum Verschiebeweg verhält.

Die in Figur 12 dargestellte neutrale Kontaktstellung wird bei Nichtbestromung der Relaisspulen 31, 32 durch die Reluktanzkräfte stets eingenommen, so daß in dieser Anordnung keine Rückstelleinrichtung zur Herstellung der neutralen oder Ruhestellung erforderlich ist. Die Schubkraft F wird bei Bestromung der Relaisspulen 31, 32 erzeugt. Die Polarität bzw. die Stromrichtung bestimmt die Verschieberichtung. Die Relaisspulen 31, 32 können in Reihe oder parallel geschaltet sein, getrennt oder gemeinsam erregt werden. Dabei läßt eine differenzierte Bestromung der Relaisspulen 31 und 32 bei einer getrennten Ansteuerung der Relaisspulen 31, 32 eine Quantifizierung des Verschiebeweges zu.

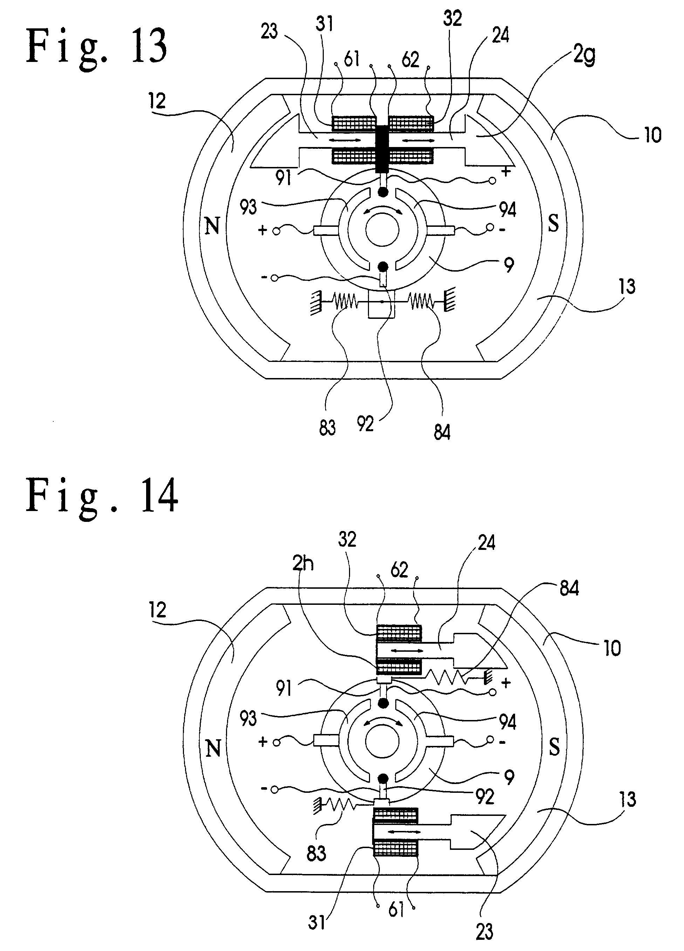

In Figur 13 ist eine Ausführungsform eines Relais 2g in einer Antriebsvorrichtung dargestellt, bei der die Relaisspulen 31, 32 fest mit den Relaisankern 23, 24 verbunden im Magnetfeld des Permanentmagneten 12, 13 des Elektromotors angeordnet sind. Die aus den Relaisankern 23, 24 und Relaisspulen 31, 32 gebildete Einheit des Relais 2g ist fest mit einer um eine Achse 90 drehbare Drehscheibe 9 verbunden, die zwei Kontaktbahnen 93, 94 aufweist, die mit Schleifkontakten 91, 92 kontaktierbar sind, an die die Motorwicklung bzw. die Bürsten des Elektromotors angeschlosssen sind, während an die Kontaktbahnen 93, 94 die Spannungsquelle angeschlossen ist.

Die Drehscheibe 9 ist zusätzlich mit einem Rückstellelement verbunden, das in diesem Ausführungsbeispiel aus zwei fest angelenkten Federn 83, 84 besteht. Die Drehachse 90 der Drehscheibe 9 fällt in dieser Ausführungsform mit der Motorwelle 11 zusammen, ohne mit dieser fest verbunden zu sein.

Durch Anlegen einer entsprechenden Polarität an den Spulenanschlüssen 61 der Relaisspule 31 wird die Relaisspule entsprechend bestromt und ein Magnetfluß in dem zugeordneten Relaisanker 23 ausgebildet, der in Wechselwirkung mit dem Magnetfeld der Permanentmagnete 12, 13 tritt und eine entsprechende Auslenkung des aus der Relaisspule 31 und dem Relaisanker 23 gebildeten Elektromagneten entgegen dem Uhrzeigersinn bewirkt, so daß die Schleifkontakte 91, 92 auf die Kontaktbahnen 93, 94 geschoben werden und damit eine entsprechende Bestromung der Motorwicklung des Elektromotors bewirkt wird.

Wird analog hierzu die Relaisspule 32 über den Spulenanschluß 62 an eine entsprechende Polarität gelegt, so wird die Relaisspule 32 entsprechend bestromt, und es erfolgt in Wechselwirkung mit dem Magnetfeld der Permanentmagnete 12, 13 des Elektromotors eine Auslenkung des aus der Relaisspule 32 und dem Relaisanker 24 gebildeten Elektromagneten im Uhrzeigersinn, so daß die an die Kontaktbahnen 93, 94 angeschlossene Motorwicklung des Elektromotors umgepolt wird.

Die beiden Federn 83, 84 ziehen die Drehscheibe 9 in die Ruhelage zurück, wenn die Relaisspulen 31, 32 nicht bestromt werden. In dieser Stellung befinden sich die Schleifkontakte 91, 92 außerhalb der Kontaktbahnen 93, 94 und der an die Kontaktbahnen 93, 94 angeschlossene Elektromotor ist stromlos. Auch in dieser Anordnung ist ein Kurzschluß des Elektromotors in der Ruhelage durch eine zusätzliche Kontaktbahn möglich, die die Schleifkontakte 91, 92 in der Ruhelage verbindet.

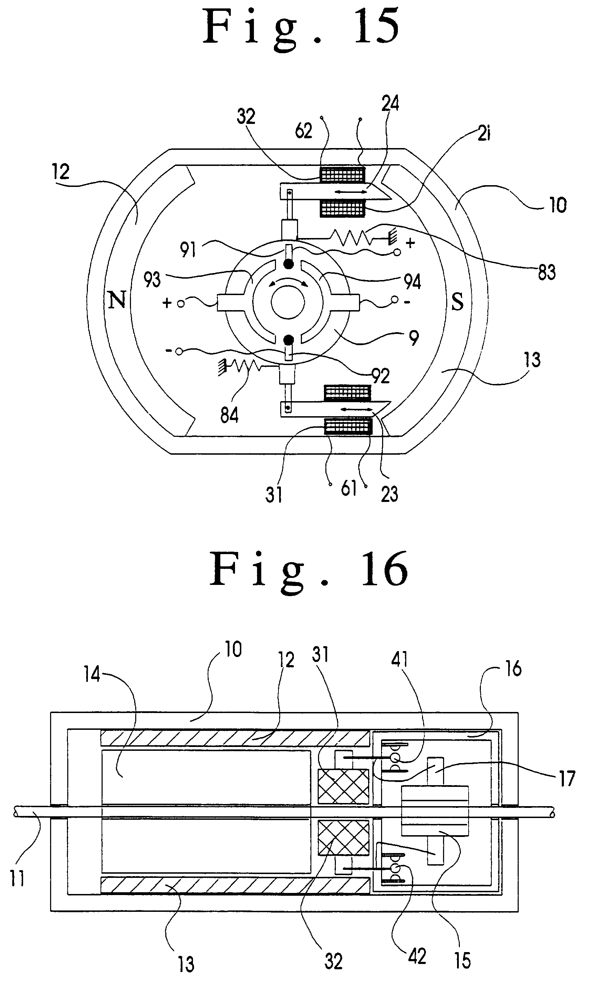

In Figur 15 ist eine Variante der Ausführungsform gemäß Figur 13 dargestellt, in der die Relaisspulen 31, 32 und Relaisanker 23, 24 des Relais 2h symmetrisch zur Drehachse der Drehscheibe 9, d.h. zur Motorwelle 11 angeordnet sind. Diese Ausführungsform zeichnet sich gegenüber dem Ausführungsbeispiel gemäß Figur 9 durch eine geringe Empfindlichkeit gegenüber Erschütterungen aus. Durch die Verbindung der Relaisanker 23, 24 mit den Relaisspulen 31, 32 werden Elektromagneten mit verhältnismäßig großer Masse gebildet, die zu größeren Schaltzeiten führen.

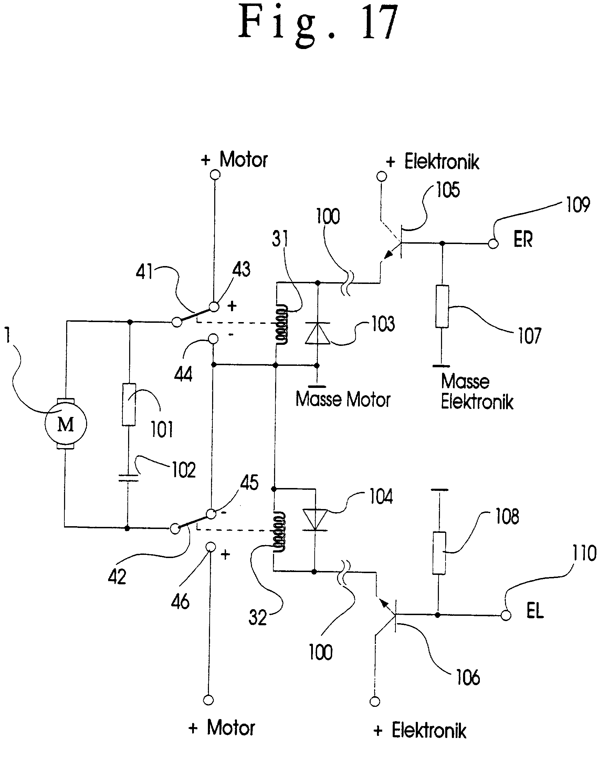

Zur Verringerung der Schaltzeiten können gemäß der in Figur 15 im Querschnitt und in Figur 16 im Längsschnitt dargestellten Ausführungsform eines Relais 2i die Relaisanker 23, 24 gegenüber den sie aufnehmenden Relaisspulen 31, 32 translatorisch beweglich angeordnet werden, um die beweglichen Massen zu verringern. Die Funktionsweise der Vorrichtungen gemäß den Figuren 14 und 15 entspricht der vorstehend dargestellten Funktionsweise der Ausführungsform gemäß Figur 13.

Der in Figur 16 dargestellte Längsschnitt durch die Antriebsvorrichtung gemäß Figur 15 zeigt die Anordnung des Relais 2i zwischen den Permanentmagneten 12, 13 bzw. dem Polschuh des Elektromotors 1 und zwischen dem Rotor 14 und dem Kommutator 15 des Elektromotors. Die Relaisspulen 31, 32 werden am Bürstenhalter 16 des Kommutators 15 befestigt und elektrisch mit den Bürsten 17 verbunden sowie radial zwischen den Permanentmagneten 12, 13 des Motorankers angeordnet. Für eine besonders raumsparende Anordnung können die Relaisspulen 31, 32 und die in den Relaisspulen 31, 32 geführten Relaisanker 23, 24 in flacher Bauweise ausgeführt werden. Die mit den Relaisankern 23, 24 verbundenen beweglichen Kontakte 41, 42 sowie die ortsfesten Kontakte 43 bis 46 befinden sich ebenfalls auf dem Bürstenhalter 16.

Figur 16 verdeutlicht die kompakte Bauweise der aus dem Elektromotor 1 und dem Relais 2 gebildeten Antriebsvorrichtung, zu deren Ansteuerung lediglich ein geringer die Relaisspulen 31, 32 bestromender und von der Ansteuerelektronik abgegebener Strom erforderlich ist.

In den Figuren 17 bis 19 werden verschiedene Ausführungsformen zur Ansteuerung des im Elektromotor integrierten Relais dargestellt und nachfolgend beschrieben:
Figur 17 zeigt eine Schaltung zur Ansteuerung des in einem Gehäuse eines Elektromotors integrierten Relais mit einer Doppelspule, bei der für jede Relaisspule eine Treiberstufe vorgesehen ist.

Die Trennung zwischen der Antriebsvorrichtung und der Ansteuerelektronik erfolgt an der mit der Bezugsziffer 100 gekennzeichneten Stelle. Das Motorengehäuse enthält den Elektromotor 1 mit einer parallelgeschalteten Funkenlöschbeschaltung für die Schaltkontakte, die beweglichen Relaiskontakte 41, 42, die mit den Elektromagneten 31, 23 bzw. 32, 24 verbunden sind und eine Verbindung zu positivem oder negativem Potential über die stationären Relaiskontakte 43 bis 46 herstellen. Die Funkenlöschbeschaltung ist in diesem Ausführungsbeispiel aus der Reihenschaltung eines Widerstandes 101 und eines Kondensators 102 zusammengesetzt und kann auch zusammen mit einem Varistor oder Z-Dioden oder aus einzelnen Widerstands- und Kondensatorelementen bestehen. parallel zu den Relaisspulen 31, 32 sind Freilaufdioden 103, 104 geschaltet, deren Anoden mit Massepotential verbunden sind.

Die Ansteuerelektronik enthält zwei Transistoren 105, 106 je Treiberstufe, deren Kollektoren mit positivem Potential der Elektronikspannung verbunden sind. Die Basen der beiden Transistoren 105, 106 sind mit dem elektronischen Ansteuersignal für Rechts- und Linklauf 109, 110 beaufschlagt und über je einen Widerstand 107, 108 mit Massepotential der Elektronikschaltung verbunden.

In der in Figur 17 dargestellten Schaltungsanordnung sind sowohl die Freilaufdioden 103, 104 als auch die in diesem Beispiel aus der Reihenschaltung des Widerstandes 101 mit dem Kondensator 102 bestehenden Funkenlöschbeschaltung für die Kontakte im Motorgehäuse integriert.

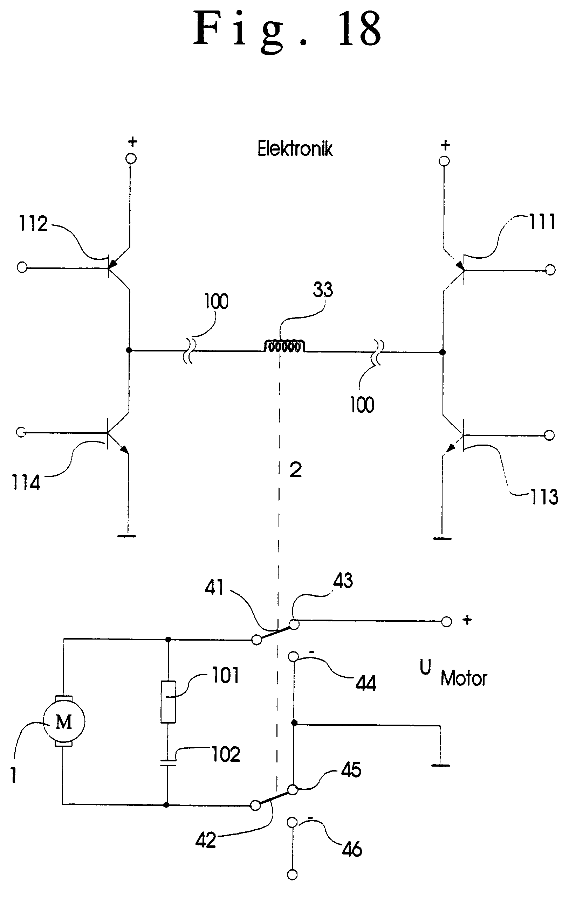

Die in Figur 18 dargestellte Schaltung dient zur Ansteuerung eines Relais mit einer Relaisspule. In dieser Schaltungsanordnung ist die Relaisspule 33 in einer Transistor-Brückenschaltung mit den Transistoren 111, 112, 113 und 114 angeordnet, wobei die Schnittstelle zwischen dem Motorgehäuse und der Ansteuerelektronik an den Stellen der Bezugsziffer 100 gegeben ist. Die im Gehäuse des Elektromotors 1 integrierten Bauteile entsprechen mit Ausnahme der Freilaufdioden den in Figur 17 dargestellten Bauelementen.

Die in der Transistor-Brückenschaltung angeordneten Transistoren 111 bis 113 sind emitterseitig mit positivem oder Massepotential verbunden, während die Kollektoren zu der die Spule aufweisenden Brückendiagonalen führen. Die Basen der Transistoren sind mit Steuersignalen El bis E4 beaufschlagt und werden so angesteuert, daß die Polarität der Relaisspule 33 in Abhängigkeit von dem gewünschten Schaltvorgang geändert wird, indem die Bestromung der Relaisspule 33 wechselweise über die eingeschalteten Transistoren 112 und 113 oder die Transistoren 111 und 114 erfolgt.

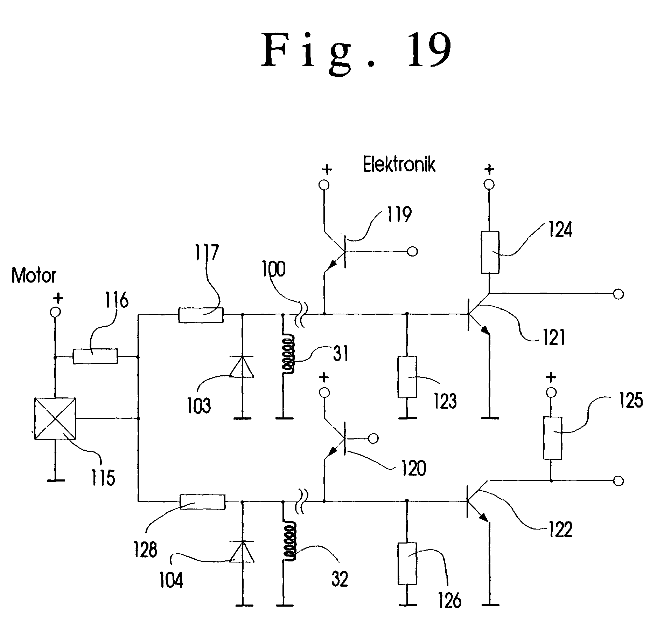

Figur 19 zeigt eine Schaltung zur Ansteuerung eines in dem Gehäuse eines Elektromotors integrierten Relais mit Auswertung eines von einem Hallsensor abgegebenen Signals zur Erkennung der Drehgeschwindigkeit bzw. Drehzahl und/oder Anzahl der Umdrehungen des Elektromotors. Durch Integration eines Doppelrelais im Gehäuse des Elektromotors besitzt nach außen vier Anschlüsse, von denen zwei zum Anlegen der Betriebsspannung und zwei zur Drehrichtungsansteuerung bzw. zur Hallsignalausgabe dienen. Die normalerweise für die Auswertung des vom Hallsensor abgegebenen Signals erforderlichen zwei Anschlüsse können so in die Schaltung integriert werden, daß sich bei einem Relais mit zwei Relaisspulen die Möglichkeit ergibt, bestimmte Anschlüsse gemeinsam zu nutzen.

Die Trennstelle zwischen dem Motorgehäuse und der Ansteuerelektronik erfolgt an der Stelle der Bezugsziffer 100 und trennt die im Motorgehäuse integrierten Bauteile Relaisspulen 31, 32, Freilaufdioden 103, 104 Widerstände 116 bis 118 und den mit dem Elektromotor gekoppelten Hallsensor 115 von der Ansteuerelektronik ab. Die Ansteuerelektronik besteht aus je einer den Relaisspulen 31, 32 zugeordneten Treiberstufe mit zwei Transistoren gleichen Leitfähigkeitstyps 119, 120, 121, 122, deren Kollektor mit positivem Potential der Elektronikschaltung verbunden sind. Die Widerstände 123, 126 legen die Verbindung des Emitters des einen Transistors 119 bzw. 120 mit der Basis des anderen Transistors 121 bzw. 122 an Massepotential der Elektronikschaltung, während die beiden an die Kollektoren der Transistoren 121, 122 angeschlossenen Widerstände 124, 125 diese mit positivem Potential der Elektronik beaufschlagen. Die Ansteuerung der Relais erfolgt über Signalleitungen El und E2, während die Hallsensor-Ausgangssignale über Anschlüsse A1 und A2 an die Ansteuerelektronik abgegeben werden.

Nachstehend soll die Funktion der in Figur 19 dargestellten Schaltung zur Ansteuerung des Motorschalters und Auswertung des Ausgangssignals des Hallsensors näher beschrieben werden.

Die Relaisspulen 31, 32 werden von der Ansteuerelektronik über die Transistoren 119, 120 analog zur Schaltungsanordnung gemäß Figur 14 angesteuert. Da zur Ansteuerung der Relaisspulen 31, 32 für jede Drehrichtung nur eine Leitung benötigt wird, ist in diesem Augenblick die jeweils andere Leitung ungenutzt. Auf diese entsprechend freie Leitung wird über die Widerstände 117, 118 das vom Hallsensor 115 abgegebenen Signal aufgeschaltet, welches über die Transistoren 121, 122 verstärkt und an die Auswertelektronik über die Anschlüsse Al, A2 weitergegeben wird. Dabei sind die in der jeweiligen Treiberstufe vorhandenen Transistoren 119, 120 auf der Leitung jeweils gesperrt, auf der die vom Hallsensor 115 abgegebenen Signale übertragen werden.

In der Schaltungsanordnung gemäß Figur 19 können die Transistoren 121, 122 entfallen, wenn die Eingangsstufen der Auswerteelektronik entsprechend gestaltet sind.

Der Hall-Sensor 115 wird an die Betriebsspannung des Elektromotors angeschlossen, wobei der Widerstand 116 zur Beschaltung des offenen Kollektorausgangs des Hallsensors 115 dient. Damit die vom Hallsensor 115 abgegebenen Sensorsignalspannungen nicht so groß werden, daß die jeweils nicht benutzte Relaisspule 31 bzw. 32 angesteuert wird, wird die Hallsignalspannung mit den Widerständen 116, 117 bzw. 118 und die Widerstände 123, 126 festgelegt.

Gegebenenfalls kann eine nachgeschaltete Filteranordnung das Hallsignal beim Auftreten von Verzerrungen durch die Relaisspulen wieder einwandfrei herstellen.

## Patentansprüche

1. Antriebsvorrichtung mit einem Elektromotor mit Permanentmagneten (12, 13) und Poltopf (10) und einem den Motorstrom schaltenden Relais mit mindestens einem Elektromagneten, der eine Relaisspule (31-35) und einen Relaisanker (21-25) enthält, und mit mindestens einem Relaiskontakt, insbesondere für Stellantriebe in Kraftfahrzeugen,
**dadurch gekennzeichnet,**
daß der Relaisanker (21-25), die Relaisspule (31-35) und die Relaiskontakte (41-46; 91-94) innerhalb des Poltopfes (10) des Elektromotors (1) angeordnet sind und daß die magnetischen Feldlinien des Elektromagneten des Relais (2-2i) über den Permanentmagneten (12, 13) und den Poltopf (10) des Elektromotors (1) verlaufen.

2. Antriebsvorrichtung nach Anspruch 1, **dadurch gekennzeichnet,** daß der Relaisanker (21 bis 25) und die Relaisspule (31, 32, 33) radial um eine Achse (11, 71, 72) drehbar im Poltopf (10) des Elektromotors (1) angeordnet sind. (Fig. 1 bis 6)

3. Antriebsvorrichtung nach Anspruch 2, **dadurch gekennzeichnet,** daß der Relaisanker (21 bis 25) aus einem Weicheisenanker mit Nuten für die Erregerwicklungen der Relaisspulen besteht und mit beweglichen, isolierten Relaiskontakten (41, 42) verbunden ist, die in Abhängigkeit von der Bestromung der Relaisspulen (31, 32, 33) zwischen zwei stationären Relaiskontakten (43 bis 46) verschwenkbar sind. (Fig. 1 bis 6)

4. Antriebsvorrichtung nach Anspruch 3, **dadurch gekennzeichnet,** daß der Relaisanker (21) konzentrisch zur Motorwelle (11) des Elektromotors (1) angeordnet ist und zwei im Relaisanker (21) eingebettete Relaisspulen (31, 32) aufweist. (Fig. 1 bis 3)

5. Antriebsvorrichtung nach Anspruch 3, **dadurch gekennzeichnet,** daß die Drehachse des Relaisanker (22) beabstandet zur Motorwelle (11) angeordnet und mit mindestens einem Rückstellelement (81) verbunden ist, das den Relaisanker (22) im stationären Magnetfeld des Permanentmagneten (12, 13) des Elektromotors (1) zentriert. (Fig. 4 bis 6)

6. Antriebsvorrichtung nach Anspruch 5, **dadurch gekennzeichnet,** daß der Relaisanker (22) gabelförmig ausgebildet ist und zwei den Polen (N, S) des Permanentmagneten (12, 13) gegenüberstehende Abschnitte (221, 222) aufweist, die einerseits mit einem die Relaisspulen (31, 32) tragenden und mit der Drehachse (71) verbundenen Abschnitt (223) und andererseits mit einem Isolationsteil (54) verbunden sind, das die beweglichen Relaiskontakte (41, 42) trägt und mit der Rückstellfeder (81) verbunden ist.

7. Antriebsvorrichtung nach mindestens einem der vorangehenden Ansprüche, **dadurch gekennzeichnet,** daß der Relaisanker (21 bis 25) bezüglich seiner Polachse symmetrisch angeordnete Flußleitelemente aufweist, deren Abstand zu den Gegenpolen des Permanentmagneten (12, 13) des Elektromotors (1) geringer ist als der Abstand der radialen Außenfläche des Relaisankers (21 bis 25).

8. Antriebsvorrichtung nach mindestens einem der vorangehenden Ansprüche, **dadurch gekennzeichnet,** daß der Relaisanker (25) in einem Drehpunkt (72) gelagert und mit einer Relaisspule (33) verbunden ist, und daß der Relaisanker (25) an seinen beiden Stirnseiten mit einem beweglichen Relaiskontakt (41, 42) verbunden ist, der in Abhängigkeit von der Bestromung der Relaisspule (33) zwischen zwei mit der Spannungsquelle verbundenen stationären Relaiskontakten (43 bis 46) verschwenkbar ist. (Fig. 7)

9. Antriebsvorrichtung nach mindestens einem der vorangehenden Ansprüche 1 bis 7, **dadurch gekennzeichnet,** daß das Relais (2c) als außermittig in Bezug auf die Motorwelle (11) angeordnetes Relais ausgebildet ist, daß der Relaisanker aus zwei Teilankern (26, 27) besteht, die über ein aus nichtmagnetischem Werkstoff bestehendes Verbindungsteil (28) miteinander verbunden sind und jeweils eine fest mit ihnen verbundene Relaisspule (33, 34) tragen und daß die Teilanker (26, 27) an den der gemeinsamen Verbindung entgegengesetzten Enden über zwei Anlenkungen (75, 76) mit Drehelementen (73, 74) verbunden sind, die mit den beweglichen Relaiskontakten (41, 42) gekoppelt sind. (Fig. 8)

10. Antriebsvorrichtung nach Anspruch 3, **dadurch gekennzeichnet,** daß die Relaisspule (31, 32, 35) und der Relaisanker (23, 24, 29) relativ zueinander linear beweglich sind und daß bei ortsfester Relaisspule (31, 32) der Relaisanker (23, 24) mit einem beweglichen Relaiskontakt (41, 42) und bei ortsfestem Relaisanker (29) die Relaisspule (35) mit einem beweglichen Relaiskontakt (41, 42) verbunden ist.

11. Antriebsvorrichtung nach Anspruch 10, **dadurch gekennzeichnet,** daß das Relais (2d, 2e) als Doppelrelais ausgebildet ist, das zwei Relaisspulen (31, 32) und zwei Relaisanker (23, 24) aufweist, die linear beweglich zueinander angeordnet und mit jeweils einem beweglichen Relaiskontakt (41, 42) und einer Rückstelleinrichtung (82 bis 84) verbunden sind. (Fig. 9 und 10)

12. Antriebsvorrichtung nach Anspruch 11, **dadurch gekennzeichnet,** daß die Relaisanker (23, 24) fluchtend zueinander angeordnet sind und die Rückstelleinrichtung aus einer zwischen den einander gegenüberliegenden Stirnseiten der Relaisanker angeordneten Zug- oder Druckfeder (82, 83) besteht.

13. Antriebsvorrichtung nach Anspruch 12, **dadurch gekennzeichnet,** daß die Relaisanker (23, 24) so angeordnet sind, daß sie von den jeweils gleichnamigen Polen des Permanentmagneten (12, 13) abgestoßen werden und bei Bestromung der Relaisspulen (31, 32) aus den Relaisspulen (31, 32) bewegbar sind. (Fig. 9)

14. Antriebsvorrichtung nach Anspruch 11 oder 12, **dadurch gekennzeichnet**, daß die Relaisanker (23, 24) so angeordnet sind, daß sie von den jeweils gleichnamigen Polen des Permanentmagneten (12, 13) angezogen werden und bei Bestromung der Relaisspulen (31, 32) in die Relaisspulen (31, 32) hineinziehbar sind. (Fig. 10)

15. Antriebsvorrichtung nach Anspruch 10, **dadurch gekennzeichnet,** daß ein Relaisanker (29) feststehend zwischen den Polen des Permanentmagneten (12, 13) angeordnet und eine Relaisspule (35) linear beweglich auf dem Relaisanker (29) angeordnet und mit den zwei beweglichen Relaiskontakten (41, 42) verbunden ist.

16. Antriebsvorrichtung nach Anspruch 10, **dadurch gekennzeichnet,** daß zwei Relaisanker fluchtend zueinander und ortsfest zwischen den Polen des Permanentmagneten (12, 13) angeordnet sind, wobei die den jeweiligen Polen des Permanentmagneten (12, 13) gegenüberstehenden Stirnseiten der Relaisanker gleichnamig ausgebildet sind und jeweils eine Relaisspule linear beweglich auf den Relaisankern angeordnet und mit einem beweglichen Relaiskontakt verbunden ist.

17. Antriebsvorrichtung nach Anspruch 16, **dadurch gekennzeichnet,** daß die beiden Relaisanker über ein nichtmagnetische Verbindungsteil miteinander verbunden sind.

18. Antriebsvorrichtung nach Anspruch 11, **dadurch gekennzeichnet,** daß die Relaisanker (23, 24) mit einer Drehscheibe (9) verbunden sind, auf der zwei mit der Motorwicklung verbundene Schleifkontakte (91, 92) und zwei mit der Spannungsquelle verbundene Kontaktbahnen (93, 94) angeordnet sind, und die mit einer die Drehscheibe (9) in neutraler Mittelstellung zentrierenden Rückstelleinrichtung (83, 84) verbunden ist. (Fig. 13 bis 16)

19. Antriebsvorrichtung nach Anspruch 1, **dadurch gekennzeichnet,** daß das Relais als quer zur Motorwelle (11) des Elektromotors angeordnetes Schieberelais (2k) ausgebildet ist. (Fig. 12)

20. Antriebsvorrichtung nach Anspruch 19, **dadurch gekennzeichnet,** daß im Relaisanker (21) des Schieberelais (2k) mindestens zwei Relaisspulen (31, 32) integriert sind und einen Elektromagneten bilden, der im Magnetfeld des als Nordpol (12) und Südpol (13) ausgebildeten Permanentmagneten des Elektromotors angeordnet ist.

21. Antriebsvorrichtung nach Anspruch 19 oder 20, **dadurch gekennzeichnet,** daß der Relaisanker (21) über eine als Gleitelement ausgebildete Isolation (51, 52) mit zwei beweglichen Relaiskontakten (41, 42) verbunden ist, denen jeweils zwei stationäre Relaiskontakte (43, 44 bzw. 45, 46) gegenüberstehen, und daß als Anschlagbegrenzung zwei Isolierkörper (53, 54) vorgesehen sind.

22. Antriebsvorrichtung nach mindestens einem der vorangehenden Ansprüche mit einer Relaisspule, **dadurch gekennzeichnet,** daß die Relaisspule (33) in der Brückendiagonalen einer Transistorbrücke (111, 112, 113, 114) angeordnet und mit den Kollektoren jeweils zweier in Reihe geschalteter Transistoren (112, 114; 111, 113) unterschiedlichen Leitfähigkeitstyps verbunden ist, wobei die Emitter der in Reihe geschalteten Transistoren (111, 112, 113, 114) unterschiedlichen Leitfähigkeitstyps mit positivem bzw. negativem oder Massepotential verbunden sind. (Fig. 18)

23. Antriebsvorrichtung nach mindestens einem der vorangehenden Ansprüche 1 bis 19 für zwei Relaisspulen, **dadurch gekennzeichnet,** daß die Relaisspulen (31, 32) über einen Anschluß miteinander verbunden und mit dem jeweils anderen Anschluß an die Laststrecke eines Transistors (105, 106) angeschlossen sind, dessen Basen mit Ausgängen (ER, EL) der Ansteuerelektronik verbunden sind. (Fig. 17)

24. Antriebsvorrichtung nach Anspruch 20 mit einem Hallsensor zur Erfassung der Motordrehzahl, **dadurch gekennzeichnet,** daß der Signalausgang des Hallsensors (115) und die Relaisspulen (31, 32) mit jeweils einer gemeinsamen Treiber- und Signalerfassungsstufe verbunden sind, über die sowohl die Steuersignale zur Ansteuerung des Relais als auch über die jeweils nicht genutzte Ansteuerleitung die Hallsignale übertragen und gegebenenfalls verstärkt und gefiltert werden. (Fig. 19)

## Claims

1. Drive device with an electric motor with permanent magnets (12,13) and pole container (10) and a relay switching the motor current and having at least one electric magnet which contains a relay coil (31-35) and a relay armature (21-25) and with at least one relay contact, more particularly for servo drives in motor vehicles, characterised in that the relay armature (21-25), the relay coil (31-35) and the relay contacts (41-46; 91-94) are mounted inside the pole container (10) of the electric motor (1) and that the magnetic field lines of the electromagnet of the relay (2-2i) extend over the permanent magnets (12, 13) and the pole container (10) of the electric motor (1).

2. Drive device according to claim 1 characterised in that the relay armature (21 to 25) and the relay coil (31, 32,33) are mounted in the pole container (10) of the electric motor (1) to rotate radially about an axis (11,71,72) (Figures 1 to 6 ).

3. Drive device according to claim 2, characterised in that the relay armature (21 to 25) consists of a soft iron armature with grooves for the energising windings of the relay coils and is connected to movable insulated relay contacts (41,42) which can swivel in dependence on the current to the relay coils (31,32,33) between two stationary relay contacts (43 to 46). Figures 1 to 6).

4. Drive device according to claim 3 characterised in that the relay armature (21) is mounted concentric with the motor shaft (11) of the electric motor (1) and has two relay coils (31, 32) embedded in the relay armature (21). (Figures 1 to 3).

5. Drive device according to claim 3 characterised in that the rotary axis of the relay armature (22) is mounted spaced from the motor shaft (11) and is connected to at least one resetting element (81) which centres the relay armature (22) in the stationary magnetic field of the permanent magnets (12,13) of the electric motor (1). (Figures 4 to 6).

6. Drive device according to claim 5 characterised in that the relay armature (22) is forked and has two sections (221,222) which oppose the poles (N, S) of the permanent magnets (12, 13) and which are connected on one side to a section (223) supporting the relay coils (31, 32) and connected to the rotary axis (71) and on the other side to an insulating part (54) which supports the movable relay contacts (41,42) and is connected to the resetting spring (81).

7. Drive device according to at least one of the preceding claims, characterised in that the relay armature (21 to 25) has flow conducting elements arranged symmetrical relative to its pole axis and whose spacing from the opposite poles of the permanent magnets (12,13) of the electric motor (1) is less than the spacing of the radial outer face of the relay armature (21 to 25).

8. Drive device according to at least one of the preceding claims, characterised in that the relay armature (25) is mounted in a rotary point (72) and is connected to a relay coil (33) and that the relay armature (25) is connected on both end sides to a movable relay contact (41,42) which can swivel in dependence on the current of the relay coil(33) between two stationary relay contacts (43 to 46) which are connected to the voltage source (Figure 7).

9. Drive device according to at least one of the preceding claims 1 to 7 characterised in that the relay (2c) is formed as a relay mounted eccentric relative to the motor shaft (11), that the relay armature consists of two partial armatures (26,27) which are connected together through a connector part (28) made of a non-magnetic material and each support a relay coil (33,34) fixedly connected to same and that the armature parts (26,27) are connected at the ends opposite the common connection through two articulated connections (75,76) to rotary elements (73,74) which are coupled to the movable relay contacts (41,42). (Figure 8).

10. Drive device according to claim 3 characterised in that the relay coil (31,32,35) and the relay armature (23, 24,29) are movable linearly relative to each other and that with a locally fixed relay coil (31,32) the relay armature (23,24) is connected to a movable relay contact (41,42) and with a locally fixed relay armature (29) the relay coil (35) is connected to a movable relay contact (41,42).

11. Drive device according to claim 10 characterised in that the relay (2d,2e) is formed as a double relay which has two relay coils (31,32) and two relay armatures (23, 24) which are arranged linearly movable relative to each other and are each connected to a movable relay contact (41,42) and a resetting device (82 to 84). (Figures 9 and 10).

12. Drive device according to claim 11 characterised in that the relay armatures (23,24) are arranged aligned with each other and the resetting device consists of a tension or compression spring (82,83) which are arranged between opposing end sides of the relay armature.

13. Drive device according to claim 12 characterised in that the relay armatures (23,24) are arranged so that they are repelled by the relevant like poles of the permanent magnets (12,13) and in the event of current to the relay coils (31,32) are movable from the relay coils (31,32) (Figure 9).

14. Drive device according to claim 11 or 12 characterised in that the relay armatures (23,24) are arranged so that they are attracted by the relevant like poles of the permanent magnets (12,13) and in the event of current to the relay coils (31,32) can be drawn into the relay coils (31,32) (Figure 10).

15. Drive device according to claim 10 characterised in that a relay armature (29) is mounted fixed between the poles of the permanent magnets (12,13) and a relay coil (35) is mounted linearly movable on the relay armature (29) and is connected to the two movable relay contacts (41,42).

16. Drive device according to claim 10 characterised in that two relay armatures are mounted aligned with each other and locally fixed between the poles of the permanent magnets (12,13) whereby the end sides of the relay armatures opposite the relevant poles of the permanent magnets (12,13) are like and a relay coil is mounted linearly movable on each relay armature and is connected to a movable relay contact.

17. Drive device according to claim 16 characterised in that the two relay armatures are connected together through a non-magnetic connecting part.

18. Drive device according to claim 11 characterised in that the relay armatures (23,24) are connected to a rotary disc (9) on which are mounted two slip contacts (91,92) which are connected to the motor winding and two contact paths (93,94) which are connected to the voltage source, and which is connected to a resetting device (83,84) which centres the rotary disc (9) in the neutral centre position (Figures 13 to 16).

19. Drive device according to claim 1 characterised in that the relay is formed as a slide relay (2k) mounted across the motor shaft (11) of the electric motor (Figure 12).

20. Drive device according to claim 19 characterised in that at least two relay coils (31,32) are integrated in the relay armature (21) of the slider relay (2k) and form an electric magnet which is mounted in the magnetic field of the permanent magnet of the electric motor which is formed as a north pole (12) and south pole (13).

21. Drive device according to claim 19 or 20 characterised in that the relay armature (21) is connected through an insulation (51,52) formed as a slide element to two movable relay contacts (41,42) whose each two stationary relay contacts (43,44, and 45,46) are opposite one another and that two insulating bodies (53,54) are provided as stop limit.

22. Drive device according to at least one of the preceding claims with a relay coil characterised in that the relay coil (33) is mounted in the bridge diagonals of a transistor bridge (111,112,113,114) and is connected to the collector of each two series-connected transistors (112,114;111,113) of different conduction type whereby the emitter of the series-connected transistors (111,112,113 114) of different conduction type are connected to positive or negative or mass potential (Figure 18).

23. Drive device according to at least one the preceding claims 1 to 19 for two relay coils, characterised in that the relay coils (31,32) are connected together through a connection and are attached with each other connection to the load path of a transistor (105,106) whose bases are connected to outputs (ER,EL) of the control electronics.

24. Drive device according to claim 20 with an echo sensor for detecting the motor speed, characterised in that the signal output of the echo sensor (115) and the relay coils (31,32) are each connected to a common driver and signal detection phase through which both the control signals for controlling the relay and, via the relevant non-used control line, the echo signals are transferred and where applicable amplified and filtered (Figure 19).

## Revendications

1. Dispositif d'entraînement comportant un moteur électrique pourvu d'un aimant permanent (12,13) et d'un pot polaire (10), et un relais, qui commute le courant du moteur et comporte au moins un électroaimant, qui contient une bobine de relais (31-35) et une armature de relais (21-25), et comportant au moins un contact de relais, notamment pour des dispositifs d'entraînement de réglage dans des véhicules automobiles,
caractérisé en ce
que l'armature (21-25) du relais, la bobine (31-35) du relais et les contacts (41-46; 91-94) du relais sont disposés à l'intérieur du pot polaire (10) du moteur électrique (1) et que les lignes de champ magnétique de l'électroaimant du relais (2-2i) s'étendent au-dessus des aimants permanents (12,13) et du pot polaire (12) du moteur électrique (1).

2. Dispositif d'entraînement selon la revendication 1, caractérisé en ce que l'armature (21 à 25) du relais et la bobine (31,32,33) du relais sont montées, de manière à pouvoir tourner autour d'un axe (11,71,72) dans le pot polaire (12) du moteur électrique (1). (Figures 1 à 6).

3. Dispositif d'entraînement selon la revendication 2, caractérisé en ce que l'armature (21 à 25) du relais est constituée par une armature en fer doux comportant des encoches pour les enroulements d'excitation des bobines du relais et est reliée à des contacts mobiles et isolés (41,42) du relais, qui peuvent pivoter en fonction de l'alimentation en courant des bobines (31,32,33) du relais entre deux contacts fixes (43 à 46) du relais. (Figures 1 à 6)

4. Dispositif d'entraînement selon la revendication 3, caractérisé en ce que l'armature (21) du relais est disposée concentriquement à l'arbre (11) du moteur électrique (1) et comporte deux bobines (31,32) logées dans l'armature (21) du relais (figures 1 à 3).

5. Dispositif d'entraînement selon la revendication 3, caractérisé en ce que l'axe de rotation de l'armature (22) du relais est disposé à distance de l'arbre (11) du moteur et est relié à au moins un élément de rappel (81), qui centre l'armature (22) du relais dans le champ magnétique fixe de l'aimant permanent (12,13) du moteur électrique (1). (Figures 4 à 6)

6. Dispositif d'entraînement selon la revendication 5, caractérisé en ce que l'armature (22) du relais est agencée en forme de fourche et comporte deux sections (221,222), qui sont situées en vis-à-vis des pôles (N,S) de l'aimant permanent (12,13) et qui sont reliées d'une part à une partie (223) qui porte les bobines (31,32) du relais et est reliée à l'axe de rotation (61), et d'autre part à une partie isolante (54), qui porte les contacts mobiles (41,42) du relais et est reliée au ressort de rappel (81).

7. Dispositif d'entraînement selon au moins l'une des revendications précédentes, caractérisé en ce que la bobine (21 à 25) du relais comporte des éléments de guidage du flux, qui sont disposés symétriquement par rapport à son axe polaire et dont la distance par rapport aux pôles antagonistes de l'aimant permanent (12,13) du moteur électrique (1) est inférieure à la distance de la surface extérieure radiale de l'armature (21 à 25) du relais.

8. Dispositif d'entraînement selon au moins l'une des revendications précédentes, caractérisé en ce que l'armature (25) du relais est supportée en un centre de rotation (72) et est reliée à une bobine (33) du relais et que l'armature (25) du relais est reliée, sur ses deux faces frontales, à un contact mobile (41,42) du relais, qui, en fonction de l'alimentation en courant de la bobine (33) du relais, peut basculer entre deux contacts fixes (43 à 46) du relais, qui sont reliés à la source de tension. (Figure 7)

9. Dispositif d'entraînement selon au moins l'une des revendications précédentes 1 à 7, caractérisé en ce que le relais (2c) est agencé sous la forme d'un relais disposé d'une manière excentrée par rapport à l'arbre (11) du moteur, que l'armature du relais est constituée de deux armatures partielles (26,27), qui sont reliées entre elles par l'intermédiaire d'une partie de liaison (28) formée d'un matériau amagnétique et portent chacune une bobine (33,34) du relais, qui est reliée de façon fixe à ces armatures partielles, et que les armatures partielles (26,27) sont reliées aux extrémités, situées à l'opposé de la liaison commune, par l'intermédiaire de deux articulations (75,76) à des éléments rotatifs (73,74), qui sont couplés aux contacts mobiles (41,42) du relais. (Figure 8)

10. Dispositif d'entraînement selon la revendication 3, caractérisé en ce que la bobine (31,32,33) du relais et l'armature (23,24,29) du relais sont déplaçables linéairement l'une par rapport à l'autre et que, dans le cas où la bobine (31,32) du relais est fixe, l'armature (23,24) du relais est reliée à un contact mobile (41,42) du relais et, dans le cas où l'armature (29) du relais est fixe, la bobine (35) du relais est reliée à un contact mobile (41,42) du relais.

11. Dispositif d'entraînement selon la revendication 10, caractérisé en ce que le relais (2d,2e) est agencé sous la forme d'un relais double, qui comporte deux bobines (31,32) et deux armatures (23,24), qui sont disposées de manière à être déplaçables linéairement l'une par rapport à l'autre et sont reliées respectivement à un contact mobile (41,42) du relais et à un dispositif de rappel (82 à 84). (Figures 9 et 10)

12. Dispositif d'entraînement selon la revendication 11, caractérisé en ce que les armatures (23,24) du relais sont disposées en étant alignées réciproquement et que le dispositif de rappel est constitué par un ressort de traction ou de pression (82,83), qui est disposé entre les faces frontales, qui sont situées en vis-à-vis, des armatures du relais.

13. Dispositif d'entraînement selon la revendication 12, caractérisé en ce que les armatures (23,24) du relais sont disposées de telle sorte qu'elles sont repoussées par les pôles respectifs de même nom de l'aimant permanent (12,13) et, dans le cas de l'alimentation en courant des bobines (31,32) du relais, peuvent être écartées de ces bobines (31,32) du relais. (Figure 9)

14. Dispositif d'entraînement selon la revendication 11 ou 12, caractérisé en ce que les armatures (23,24) du relais sont disposées de telle sorte qu'elles sont attirées par les pôles respectifs de même nom de l'aimant permanent (12,13) et, dans le cas d'une alimentation en courant des bobines (31,32) du relais, peuvent être rétractées dans les bobines (31,32) du relais. (Figure 10)

15. Dispositif d'entraînement selon la revendication 10, caractérisé en ce qu'une armature (29) du relais est disposée entre les pôles de l'aimant permanent (12,13) et qu'une bobine (35) du relais est disposée de manière à être déplaçable linéairement sur l'armature (29) du relais et est reliée aux deux contacts mobiles (41,42) du relais.

16. Dispositif d'entraînement selon la revendication 10, caractérisé en ce que deux armatures du relais sont disposées d'une manière alignée l'une sur l'autre et de façon fixe entre les pôles de l'aimant permanent (12, 13), les faces frontales des armatures du relais, qui sont situées en vis-à-vis des pôles respectifs de l'aimant permanent (12,13), sont de même nom et que respectivement une bobine du relais est disposée de manière à être déplaçable linéairement sur les armatures du relais et est reliée à un contact mobile du relais.

17. Dispositif d'entraînement selon la revendication 16, caractérisé en ce que les deux armatures du relais sont reliées entre elles par l'intermédiaire d'une partie de liaison amagnétique.

18. Dispositif d'entraînement selon la revendication 11, caractérisé en ce que les armatures (23,24) du relais sont reliées à un disque rotatif (9), sur lequel sont disposés deux contacts glissants (91,92), qui sont reliés à l'enroulement du moteur et deux voies conductrices (93,94) reliées à la source de tension, et qui est relié à un dispositif de rappel (83,84), qui centre le disque rotatif (9) dans une position centrale neutre. (Figures 13 à 16)

19. Dispositif d'entraînement selon la revendication 1, caractérisé en ce que le relais est agencé sous la forme d'un relais à coulisse (2k) qui est disposé transversalement par rapport à l'arbre (11) du moteur électrique. (Figure 12)

20. Dispositif d'entraînement selon la revendication 19, caractérisé en ce qu'au moins deux bobines (31,32) du relais sont intégrées dans l'armature (21) du relais à coulisse (2k), et forment un électroaimant qui est disposé dans le champ magnétique de l'aimant permanent du moteur électrique, qui est agencé sous la forme d'un pôle nord (12) et d'un pôle sud (13).

21. Dispositif d'entraînement selon la revendication 19 ou 20, caractérisé en ce que l'armature (21) du relais est reliée par l'intermédiaire d'un isolant (51,52) agencé sous la forme d'un élément coulissant, à deux contacts mobiles (41,42) du relais, en vis-à-vis desquels sont disposés respectivement deux contacts fixes (43, 44 ou 45, 46) du relais, et que deux corps isolants (53,54) sont prévus en tant que butées de limitation.

22. Dispositif d'entraînement selon au moins l'une des revendications précédentes comportant une bobine de relais, caractérisé en ce que la bobine (33) du relais est disposée dans la diagonale d'un pont de transistors (111,112,113,114) et est reliée aux collecteurs de deux transistors respectifs (112,114;111,113) qui sont branchés en série et possèdent des types de conductivité différents, les émetteurs des transistors (111,112,113,114) branchés en série et possédant des types de conductivité différents étant reliés à un potentiel positif ou à un potentiel négatif ou à un potentiel de masse (figure 18).

23. Dispositif d'entraînement selon au moins l'une des revendications précédentes 1 à 19 pour deux bobines de relais, caractérisé en ce que les bobines de relais (31,32) sont reliées entre elles par l'intermédiaire d'une borne et sont raccordées par l'autre borne respective, à la section de charge d'un transistor (105,106), dont les bases sont reliées à des sorties (ER,EL) du système électronique de commande. (Figure 17)

24. Dispositif d'entraînement selon la revendication 20, comportant un capteur de Hall pour la détection de la vitesse de rotation du moteur, caractérisé en ce que la sortie du signal du capteur de Hall (115) et les bobines (31,32) du relais sont reliées à des étages communs respectifs d'attaque et de détection de signaux, par l'intermédiaire desquels aussi bien les signaux de commande pour la commande du relais que, également par l'intermédiaire de la ligne de commande respective non utilisée, les signaux de Hall sont transmis et éventuellement amplifiés et filtrés. (Figure 19).
